# EUROPÄISCHE PATENTSCHRIFT

(11) **EP 3 797 221 B1**
(45) Veröffentlichungstag und Bekanntmachung des Hinweises auf die Patenterteilung: **09.06.2021**
(21) Anmeldenummer: 20701402.8
(22) Anmeldetag: 14.01.2020
(51) Int. Cl.: F01N 3/20, F01N 3/28, F01N 3/021, F01N 3/10, B01F 3/04, B01F 5/00, B01F 5/04

(54) **EINRICHTUNG ZUM ZUFÜHREN EINES CHEMISCHEN REAKTIONSMITTELS IN DEN ABGASSTRANG EINER BRENNKRAFTMASCHINE**
ARRANGEMENT FOR SUPPLYING A CHEMICAL REACTION AGENT INTO THE EXHAUST SYSTEM OF AN INTERNAL COMBUSTION ENGINE
DISPOSITIF POUR ALIMENTER UN RÉACTIF CHIMIQUE DANS LE SYSTÈME D'ÉCHAPPEMENT D'UN MOTEUR À COMBUSTION INTERNE

(30) Priorität: 17.01.2019 DE 202019100256 U
(43) Veröffentlichungstag der Anmeldung: 31.03.2021
(73) Patentinhaber: HJS Emission Technology GmbH & Co. KG, 58706 Menden (DE)
(72) Erfinder: KHIBIT, Aomar, 44309 Dortmund (DE); KÄSTNER, Thomas, 44229 Dortmund (DE); SCHREWE, Klaus, 59602 Rüthen (DE)
(74) Vertreter: Haverkamp, Jens
(86) Internationale Anmeldenummer: PCT/EP2020/050786
(87) Internationale Veröffentlichungsnummer: WO 2020/148268

(56) Entgegenhaltungen:
- EP-A1- 2 607 641
- EP-A1- 3 093 463
- CN-A- 107 060 961
- CN-U- 206 016 920

## Beschreibung

Die Erfindung betrifft eine Einrichtung zum Zuführen eines chemischen Reaktionsmittels in den Abgasstrang einer Brennkraftmaschine, umfassend
- ein Mischergehäuse mit einer Eintrittsöffnung, durch die der Abgasstrom in das Mischergehäuse eintritt,
- ein von dem in das Mischergehäuse einströmenden Abgasstrom quer angeströmtes Dosierrohr mit einem ersten Ende und mit einem zweiten Ende,
- eine an dem ersten Ende des Dosierrohrs angeordnete, an einen Reaktionsmittelvorrat anschließbare Dosiereinheit zum Ausgeben von Reaktionsmittel in das Dosierrohr und
- Mittel zum Erzeugen einer Drallströmung des Abgasstroms , wobei diese Mittel ausgelegt sind, diese innerhalb des Dosierrohres zu erzeugen und zu diesem Zweck das Dosierrohr wenigstens eine sich über zumindest einen Abschnitt der innerhalb des Mischergehäuses befindlichen Länge des Dosierrohres erstreckende Einströmöffnung mit mindestens einer auf dem Dosierrohr angeordneten, den Abgasstrom exzentrisch in die Einströmöffnung lenkenden, schaufelartigen Haube aufweist, wobei diese mindestens eine schaufelartige Haube die wenigstens eine Einströmöffnung seitlich und rückseitig einfasst und zumindest größtenteils in radialer Richtung überdeckt und wobei zwischen der zumindest einen Haube und der inneren Mantelfläche des Mischergehäuses ein Spalt verbleibt.
Beschrieben ist des Weiteren eine Abgasreinigungsanlage zum Reduzieren des NOx-Gehaltes des Abgases einer Brennkraftmaschine mit einer solchen Einrichtung.

Moderne Brennkraftmaschinen, etwa wenn es sich bei diesen um Dieselbrennkraftmaschinen, vor allem eingesetzt als dynamisch belastete Dieselmotoren, handelt, sind mit einer Abgasreinigungsanlage ausgerüstet, um den Emissionsanforderungen zu genügen. Diese Anforderungen betreffen unter anderem eine Begrenzung des NOx-Ausstoßes. Bei derartigen Abgasreinigungsanlagen wird der NOx-Ausstoß in vielen Fällen über eine selektive katalytische Reaktion der im Abgas enthaltenen Stickoxide (NOx) herbeigeführt. Eingesetzt werden hierfür sogenannte SCR-Katalysatoren (SCR: Selective Catalytic Reduction). Damit die gewünschte katalytische Reduktion der Stickoxide an einem solchen SCR-Katalysator erfolgt, wird als Reaktionsmittel ein Reduktionsmittel benötigt. Eingesetzt wird hierfür typischerweise Ammoniak, welches in Form von flüssigem Harnstoff (Urea) stromauf bezüglich des SCR-Katalysators in diesen eingebracht wird. Zum Freisetzen des in dem Precursor enthaltenen Reduktionsmittels (Ammoniak) wird eine gewisse Temperatur benötigt. Daher ist es für eine wirksame Entstickung der Abgase erforderlich, dass die Abgastemperatur hinreichend hoch ist. Die Reaktionen zum Freisetzen des Reduktionsmittels aus dem Precursor laufen, vor allem wenn die Abgastemperaturen nicht hinreichend hoch sind, nicht spontan ab, sondern benötigen eine gewisse Zeit. Aus diesem Grunde wird eine gewisse Strömungsstrecke zwischen der Dosiereinheit, mit der der Precursor zugeführt wird und dem SCR-Katalysator benötigt. Ist das Reduktionsmittel (Ammoniak) freigesetzt, findet die gewünschte katalytische Reaktion zum Reduzieren bzw. Eliminieren der im Abgas mitgeführten Stickoxide an dem SCR-Katalysator statt. Nicht gewünscht ist, dass der SCR-Katalysator mit noch nicht umgesetzten Precursor angeströmt wird, da sich dann die Flüssigkeitstropfen auf der anströmseitigen Oberfläche des SCR-Katalysators ablagern. Zudem wird beim Anströmen des SCR-Katalysators eine möglichst gute Gleichverteilung des im Abgasstrom freigesetzten Reduktionsmittels und auch eine gleichförmige Geschwindigkeitsgleichverteilung über seine Querschnittsfläche gewünscht. Auch sollen Niederschläge von flüssigem Precursor im Abgasstrang möglichst vermieden werden.

Um diesen Anforderungen an die Zuführung eines als flüssigen Precursor dosierten Reduktionsmittels zu genügen, wird in WO 2015/018971 A1 sowie WO 2016/207484 A1 vorgeschlagen, innerhalb eines Mischergehäuses ein Dosierrohr anzuordnen, an dessen einem Ende eine Dosiereinheit zum Einspritzen des Precursors angeordnet ist. Das Dosierrohr ist als Loch- bzw. Siebblech ausgestaltet und weist eine kegelförmige Ausgestaltung auf, wobei sich die Querschnittsfläche in Richtung von der Dosiereinheit weg verringert. Das Dosierrohr ist quer zu seiner Längserstreckung angeströmt.

Das Dosierrohr greift mit seinem der Dosiereinheit gegenüberliegenden Endabschnitt in ein Mantelrohr ein, und zwar unter Belassung eines Ringspaltes. Bei der Einrichtung gemäß diesem Stand der Technik wird eine Drallströmung auf der Außenseite des Dosierrohres erzeugt. Diese wird innerhalb des als Düse dienenden Ringspaltes zwischen dem Dosierrohr und dem Mantelrohr beschleunigt. Durch den Geschwindigkeitskontrast zwischen der außenliegenden Drallströmung und der Abgasströmung innerhalb des Dosierrohres wird der in Form von Flüssigkeitströpfchen in das Dosierrohr eingespritzte Precursor mit dem Abgasstrom vermischt. Ausgangsseitig zu dem Dosierrohr ist ein Leitblech angeordnet, durch den der Abgasstrom in die entgegengesetzte Richtung umgelenkt wird. Auf dieses Leitelement wird das Reduktionsmittel aufgespritzt, welches sich in dem daran umgelenkten Abgasstrom verteilt. Das Freisetzen des Reduktionsmittels erfolgt auf kurzer Strecke, so dass diese vorbekannte Einrichtung auch bei geringem, zur Verfügung stehenden Bauraum eingesetzt werden kann. Durch die mehrfache Umlenkung des Abgasstroms in jeweils entgegengesetzte Strömungsrichtungen muss ein entsprechender Abgasgegendruck in Kauf genommen werden.

In WO 2011/163395 A ist eine weitere Dosier- und Mischanordnung zur Verwendung bei einer Abgasnachbehandlung beschrieben. Bei diesem Stand der Technik ist das Dosierrohr ebenfalls als Lochblechrohr ausgeführt, weist jedoch eine zylindrische Form auf. Das Dosierrohr ist von dem zu reinigenden Abgasstrom, quer in einem Gehäuse befindlich, angeordnet. In Strömungsrichtung dem anströmenden Abgas vorgeschaltet befindet sich in dem Gehäuse ein Leitelement, welches ausgelegt ist, das anströmende Abgas an dem Dosierrohr vorbeizuleiten, um auf diese Weise außenseitig bezüglich des Dosierrohres eine Drallströmung zu erzeugen.

Wie auch bei dem zuvor gewürdigten Stand der Technik verfolgt auch dieser Stand der Technik das Konzept, eine Drallströmung außerhalb eines nach Art eines Lochbleches ausgeführten Dosierrohres zu erzeugen, die sich infolge der nach Art eines Rasters angeordneten Öffnungen in das Rohrinnere fortsetzt. Nachteilig an einer solchen Auslegung einer solchen Abgasreinigungsanlage ist, dass sich unkontrolliert das in flüssiger Form zugeführte Reduktionsmittel in den Lochöffnungen des Dosierrohres auf der jeweiligen Strömungsschattenseite ablagern kann, sodass nicht gewährleistet werden kann, dass die aktuell für eine hinreichende Entstickung benötigte Reduktionsmittelmenge tatsächlich dem nachgeschalteten SCR-Katalysator zugeführt wird. Ein NOx-Schlupf ist daher nicht ausgeschlossen.

Eine Mix-Box für eine Abgasanlage einer Verbrennungskraftmaschine zum Einmischen von Additiven in einen Abgasstrom ist aus WO 2016/142292 A1 bekannt. Auch bei dieser Einrichtung wird das Dosierrohr quer angeströmt, und zwar durch ein parallel zu dem Dosierrohr angeordnetes Einlassrohr, welches in seinem zu dem Auslassrohr parallelen Abschnitt als Siebrohr ausgeführt ist, so dass das Abgas in radialer Richtung aus dem Einlassrohr austritt. Zwischen den beiden Rohren befindet sich ein Strömungsvolumen. Dieses ist randlich durch Strömungsleitelemente begrenzt, die Einfluss auf die Ablenkung des aus dem Einlassrohr austretenden Abgasstromes in Umfangsrichtung bzw. in radialer Richtung zu dem als Dosierrohr dienenden Auslassrohr haben. Somit wird auch bei diesem Stand der Technik außerhalb des Dosierrohrs eine Drallströmung erzeugt, die durch in das Auslassrohr eingebrachte Öffnungen in dieses eintritt. In einer Weiterbildung sind die Einströmöffnungen des Dosierrohrs (Auslassrohrs) mit von der äußeren Mantelfläche ausgestellten Flügeln ausgerüstet. Der Sprühkegel, mit dem der flüssige Reduktionsmittelprecursor in das Dosierrohr eingespritzt wird, ist ausgelegt, damit dieser im Bereich der Einströmöffnung des Dosierrohres auf die innere Mantelfläche desselben auftrifft.

Auch wenn die erforderliche Strömungsstrecke zum Freisetzen des in einem flüssigen Precursor enthaltenden Reduktionsmittels als chemisches Reaktionsmittel aufgrund des vorbeschriebenen Effektes auf gegenüber anderen Ausgestaltungen kürzerer Strömungsstrecke möglich ist und sich daher diese Einrichtung auch bei beengten Bauraumverhältnissen einsetzen lässt, wäre es wünschenswert, wenn der erforderliche Bauraum weiter reduziert werden könnte und dennoch eine Umsetzung des Precursors zum Freisetzen des darin enthaltenen Reaktionsmittels auch bei geringeren Abgasvolumenströmen, ohne eine nicht mehr akzeptable Ablagerung von flüssigen Precursortröpfchen in Kauf nehmen zu müssen, möglich ist.

EP 3 093 463 A1 offenbart eine Einrichtung zum Zuführen eines chemischen Reaktionsmittels in den Abgasstrang einer Brennkraftmaschine. Bei dieser Einrichtung ist ein Leitelement zum Erzeugen einer Drallströmung innerhalb des Dosierrohres vorgesehen. Durch das Leitelement wird über eine Einströmöffnung der Abgasstrom exzentrisch in das Dosierrohr gelenkt. Die Einströmöffnung erstreckt sich über ein Mantelflächensegment von nicht weniger als 45° in Umfangsrichtung.

CN 206016920 U offenbart eine weitere Einrichtung zum Zuführen eines chemischen Reaktionsmittels in den Abgasstrang einer Brennkraftmaschine. Die aus diesem Stand der Technik bekannt gewordene Einrichtung umfasst die Merkmale des Oberbegriffs des Anspruchs 1.

CN 107060961 A offenbart eine Einrichtung, die prinzipiell ähnlich aufgebaut ist, wie die aus EP 3 093 463 A1, wobei die Leitelemente bei diesem Stand der Technik ebenso wie beim Gegenstand der CN 206016920 U als gerade Platten ausgeführt sind. Die Einströmöffnungen dieses Standes der Technik erstrecken sich ebenfalls nur über wenige Winkelgrade des Dosierrohrs.

Ausgehend von CN 206016920 U liegt der Erfindung die Aufgabe zugrunde, eine Einrichtung zum Zuführen eines chemischen Reaktionsmittels in den Abgasstrang einer Brennkraftmaschine dergestalt zu verbessern, dass Wandablagerungen von Reaktionsmittel gering gehalten werden.

Gelöst wird diese Aufgabe erfindungsgemäß durch eine eingangs genannte, gattungsgemäße Einrichtung mit den weiteren Merkmalen des Kennzeichens des Anspruchs 1.

Bei dieser Einrichtung zum Zuführen eines chemischen Reaktionsmittels in den Abgasstrang einer Brennkraftmaschine, insbesondere zum Zuführen von Ammoniak an einen SCR-Katalysator, wobei dieses chemische Reaktionsmittel in Form eines in Tröpfchen zerteilten flüssigen Precursors in den Abgasstrang eingespritzt wird, wird eine Drallströmung erst innerhalb des Dosierrohres infolge des Umlenkens des das Dosierrohr quer anströmenden Abgasstroms über die zumindest eine schaufelartige Haube in das Dosierrohr hinein erzeugt. Dieses erlaubt eine Ausbildung einer besonders energiereichen Drallströmung mit einfachen Mitteln und ohne notwendigerweise einen mitunter zu hohen Abgasgegendruck in Kauf nehmen zu müssen. Eine energiereichere Drallströmung mit entsprechend höherer Strömungsgeschwindigkeit begünstigt den Tröpfchentransport von in die Drallströmung eingebrachten flüssigen Precursortröpfchen.

Erzeugt wird die Drallströmung des Abgases innerhalb des Dosierrohres unter Ausnutzung der querseitigen Anströmung desselben durch das Abgas. Das Dosierrohr verfügt über zumindest eine Einströmöffnung, durch die der Abgasstrom in das Dosierrohr einströmt. Diese zumindest eine Einströmöffnung erstreckt sich in Umfangsrichtung des Dosierrohres über ein Mantelflächensegment von nicht weniger als 45°. In Längserstreckung des Dosierrohres erstreckt sich diese wenigstens eine Einströmöffnung über zumindest 40 bis 60% der Länge des in dem Mischergehäuse in dem Dosierrohrumströmungsraum befindlichen Abschnitt des Dosierrohres. Der Dosierrohrumströmungsraum kann durch das Mischergehäuse selbst oder auch ein innerhalb des Mischergehäuses befindliches Bauteil begrenzt sein. In dem Dosierrohrumströmungsraum strömt anströmendes Abgas um das Dosierrohr. Dennoch wird die gewünschte Drallströmung in dem Dosierrohr erst innerhalb desselben durch Einlenken des Abgasstromes in das Dosierrohr bereitgestellt. Gemäß einer Ausgestaltung erstreckt sich die Einströmöffnung in Richtung der Längserstreckung des Dosierrohres über zumindest 70 bis 75 % seiner sich innerhalb des Mischergehäuses befindlichen Länge. Aufgrund der vorstehend skizzierten Erstreckung der zumindest einen Einströmöffnung in Umfangsrichtung des Dosierrohres ist die Anzahl der möglichen Einströmöffnungen begrenzt. Überdies ist deren Querschnittsfläche der wenigstens einen Einströmöffnung mit ihrer schaufelartigen Haube zur Aufnahme des anfallenden Abgasstromes entsprechend groß, sodass bereits aus diesem Grunde Reaktionsmittelablagerungen, etwa flüssige Urea-Tröpfchen als Ammoniakprecursor darin so gut wie ausgeschlossen sind. Die Querschnittsfläche der wenigstens einen Einströmöffnung ist angepasst an die Geschwindigkeit der zu erzeugenden Drallströmung sowie an den zu erwartenden Abgasvolumenstrom. Aufgrund der Konzeption dieser Zuführeinrichtung ist die Querschnittsfläche, mit der das Dosierrohr mit Abgas angeströmt wird, deutlich größer als die Querschnittsfläche des Dosierrohres.

Von Besonderheit bei dieser Einrichtung ist, dass jede Einströmöffnung mit einer darauf angeordneten schaufelartigen Haube ausgerüstet ist. Aufgrund der schaufelartigen Auslegung der Haube ist die Einströmöffnung seitlich und rückseitig eingefasst und zumindest größtenteils in radialer Richtung überdeckt. Durchaus möglich ist es, dass die Mündung der Haube über den vorderen einströmseitigen Rand der von dieser bedeckten Einströmöffnung überragt. Eine solche Haube dient zum Lenken des das Dosierrohr quer anströmenden Abgasstromes in die Einströmöffnung hinein. Zumindest eine auf einer Einströmöffnung angeordnete Haube weist mit ihrer Mündung zu diesem Zweck in Richtung der Eintrittsöffnung des Abgases in das Mischergehäuse, so dass das in das Mischergehäuse eintretende Abgas zumindest zum Teil direkt in die Haube und somit in die Einströmöffnung des Dosierrohres einströmt. Das tangentiale Einlenken des Abgasstromes in das typischerweise eine kreisrunde Querschnittsgeometrie aufweisende Dosierrohr führt zu der gewünschten Abgasdrallströmung an der Innenwand des Dosierrohres. Da die Drallströmung innerhalb des Dosierrohres erzeugt wird, müssen im Unterschied zu vorbekannten Auslegungen derartiger Einrichtungen nur geringere Strömungsverluste hingenommen werden. Bei Vorsehen von mehreren Einströmöffnungen und demzufolge auch mehreren auf der Mantelfläche des Dosierrohres angeordneten Hauben sind diese bezüglich ihrer Haubenmündung in Umfangsrichtung des Dosierrohres gesehen gleichsinnig orientiert. Da sich das Dosierrohr in dem Mischergehäuse, dieses durchquerend, befindet, ist die querseitige Anströmfläche des Abgasstromes deutlich größer als die Querschnittsfläche des typischerweise zylindrischen Dosierrohres. Infolgedessen erfährt der Abgasstrom bei Eintritt in eine solche Haube und damit in das Innere des Dosierrohres eine signifikante Beschleunigung, und zwar sowohl in Rotationsrichtung der Drallströmung als auch in Längserstreckung des Dosierrohres. Da das Dosierrohr durch die Dosiereinheit an seinem ersten Ende verschlossen ist, pflanzt sich die Drallströmung innerhalb des Dosierrohres von diesem Ende zu dem zweiten Ende des Dosierrohres hin fort.

Bei dieser Einrichtung zum Zuführen eines chemischen Reaktionsmittels in den Abgasstrang einer Brennkraftmaschine lässt sich über den Abgasgegendruck die Steigung der in dem Dosierrohr erzeugten Drallströmung einstellen. Je geringer die Steigung ist, mit der sich die Drallströmung in Richtung zu dem zweiten Ende des Dosierrohres hin bewegt, desto länger ist die Strömungsstrecke, jedoch ohne dass hierfür die tatsächliche Länge des Dosierrohres verlängert werden müsste. Aus diesem Grunde kann die Baulänge herkömmlicher Einrichtungen für die erforderliche Aufbereitung zum Freisetzen des beispielsweise gewünschten Ammoniaks bei Zuführen von wässriger Harnstofflösung um mehr als 50% reduziert werden.

In einem erfindungsgemäßen Ausführungsbeispiel ist der Sprühwinkel, mit dem das flüssige Reaktionsmittel in das Dosierrohr eingespritzt wird, so eingerichtet, dass die Precursortröpfchen erst hinter der zumindest einen Einströmöffnung in Kontakt mit der Innenwand des Dosierrohres gelangen, zumindest soweit diese nicht zuvor von der Abgasdrallströmung aufgenommen worden sind. Der Abschnitt des Dosierrohres in Strömungsrichtung des Abgases hinter den Einströmöffnungen ist derjenige Abschnitt, in dem die höchsten Strömungsgeschwindigkeiten der Abgasdrallströmung zu beobachten sind. Zudem ist dieser Abschnitt des Dosierrohres erfindungsgemäß außenseitig von dem in die Einrichtung einströmenden Abgas benachbart zu der zumindest einen Einströmöffnung angeströmt und durch dieses in besonderer Weise erwärmt. Dieses macht man sich bei einer besonderen Ausgestaltung eines Betriebs dieser Zuführeinrichtung zunutze. Bei dieser Betriebsweise wird entgegen der herrschenden Lehre flüssiger Precursor in das Dosierrohr mit einer Menge eingespritzt, dass diese auf diesen erwärmten Innenwandabschnitt des Dosierrohres auftrifft. Die Folge ist, dass größere Precursortröpfchen durch den Aufprall in kleinere Tröpfchen zerteilt werden und zudem dieser erwärmte Dosierrohrabschnitt für das Freisetzen des in dem Precursor enthaltenen Reaktionsmittels, beispielsweise Ammoniak, genutzt wird. Durch diesen Vorgang kann die erforderliche Strömungsstrecke für das Freisetzen des Reaktionsmittels und für die gewünschte Gleichverteilung desselben innerhalb des Abgasstroms bereits auf kürzerer Rohrstrecke erreicht werden. Die flüssige Precursordosierung wird dabei vorzugsweise so vorgenommen, dass nach einem ersten Dosiertakt der nachfolgende Dosiertakt erst gestartet wird, wenn an die Dosierrohrinnenwand gespritzter Precursor abgedampft ist. Dabei wird über die Dosiereinheit der Precursor unter Druck stehend ausgegeben, mithin mit einem vorgegebenen Druck, beispielsweise einem Druck zwischen 6 und 10 bar in axialer Richtung in das Innere des Dosierrohrs eingespritzt.

In einer Ausgestaltung einer solchen Einrichtung befindet sich die zumindest eine Einströmöffnung in Bezug auf die Längserstreckung des Dosierrohres innerhalb des Dosierrohrumströmungsraumes außermittig angeordnet, und zwar in Richtung zu der Dosiereinheit hin versetzt. Dieses bedeutet, dass der Abstand der Haube der zumindest einen Einströmöffnung von dem den Dosierrohrumströmungsraum begrenzenden Wandabschnitt in Richtung zum zweiten Ende des Dosierrohres hin größer ist als der Abstand dieser Haube von der gegenüberliegenden Wand. Gewährleistet ist hierdurch, dass der in Strömungsrichtung des Abgases durch das Dosierrohr hinter der zumindest einen Einströmöffnung befindliche Dosierrohrabschnitt außenseitig von einem guten Anteil des Abgases angeströmt und typischerweise auch umströmt ist. Dieser Abschnitt des Dosierrohres ist unmittelbar von dem durch die zumindest eine Einströmöffnung strömenden Abgas angeströmt mit der Folge, dass dieser Abschnitt des Dosierrohres von dem eintretenden Abgas besonders gut erwärmt wird. Dieser durch das anströmende Abgas erwärmte Abschnitt der Mantelfläche des Dosierrohres kann etwa vier bis sechsmal so lang sein, wie der Abschnitt des Dosierrohres von der Haube zu der gegenüberliegenden, den Dosierrohrumströmungsraum begrenzenden Wand. Einfluss auf den unterschiedlichen Abstand hat auch die Länge der einen oder der mehreren Einströmöffnungen in Längserstreckung des Dosierrohres.

Die Transportrichtung in Längserstreckung des Dosierrohres sorgt dafür, dass die eingespritzten Precursortröpfchen in Längserstreckung des Dosierrohres von dem Ort der Einspritzung weg transportiert werden und typischerweise nicht etwa in der Nähe der Eindosierung akkumuliert, zum Teil abgelagert und sich dort ansammeln können.

Um auch unmittelbar im Bereich der Precursortröpfchenabgabe innerhalb des Dosierrohres eine Abgasströmung zu erhalten, um mögliche Precursortröpfchenablagerungen im Bereich des oder der Injektordüsen zu vermeiden, ist in einem Ausführungsbeispiel vorgesehen, im zu der Dosiereinheit benachbarten Dosierrohrabschnitt, der durchaus in direktem radialen Abstand zu den Injektoren angeordnet sein kann, Spülöffnungen in dem Dosierrohr vorzusehen. Durch dieses in das Dosierrohrinnere eintretende Abgas erzeugt unmittelbar an dem oder den Injektormündungen und damit an dem die Dosiereinheit tragenden Dosierflansch eine an diesen vorbeistreichenden Abgasteilstrom. Dieser hält den oder die Injektoren von Precursortröpfchenablagerungen befreit. Die innerhalb des Dosierrohres erzeugte Drallströmung erfasst den oder die zentrisch angeordneten Injektoren nicht oder nur untergeordnet, weshalb derartiger Spülöffnungen ein sehr einfaches, jedoch probates Mittel sind, die Injektoren von Precursorablagerungen freizuhalten. Unterstützt wird dieses durch Turbulenzen, die zwischen der an der Innenwand des Dosierrohres strömenden Mantelströmung und dem durch die Spülöffnungen eintretenden Abgasteilstrom entstehen. Derartige Spülöffnungen können nach Art eines Rasters angeordnete Löcher sein, durchaus in Form eines umlaufenden Ringes. Die Öffnungen können eine kreisrunde oder auch langlochartige Querschnittsfläche aufweisen. Über die Querschnittsfläche der Summe der Spülöffnungen lässt sich der Abgasgegendruck einstellen und damit auch die Steigung der Drallströmung in Richtung zu dem zweiten Ende des Dosierrohrs hin.

Bei einer solchen Einrichtung ist es zweckmäßig, wenn eine Haube mit ihrer Mündung in Richtung zu der Eintrittsöffnung des Mischergehäuses weist. Dann tritt das Abgas direkt in die Haubenmündung ein und wird exzentrisch in das Dosierrohr gelenkt. Infolge der damit einhergehenden Querschnittsverringerung erfährt der Abgasstrom die gewünschte Beschleunigung. Die in Strömungsrichtung des Abgases vordere Kante der Einströmöffnung des Dosierrohres befindet sich typischerweise im Bereich der quer zur Anströmrichtung des Abgases verlaufenden Mittellängsebene des Dosierrohres oder befindet sich wenige Winkelgrade vor dieser Ebene. Diese Einströmöffnung erstreckt sich gemäß einer Ausführung einer solchen Einrichtung über etwa 90°, bzw. um wenige Winkelgrade mehr als 90°, etwa 95 bis 100°. Die Haube ist gemäß einer Ausgestaltung einer solchen Einrichtung ein separat hergestelltes Bauteil, welches auf die äußere Mantelfläche des Dosierrohres aufgesetzt und mit dieser dreiseitig verschweißt ist. Dann sind die Freiheitsgrade in der Herstellung der Haube bezüglich ihrer Geometrie vereinfacht. Das Verschweißen der Haube mit der äußeren Mantelfläche des Dosierrohres ist von Vorteil, da dann für die Befestigung der Haube an bzw. auf dem Dosierrohr keine von der Innenwand desselben abragenden Elemente existieren, die die daran entlangströmende Drallströmung beeinflussen und damit beeinträchtigen könnten. Bei einer solchen Haube ist die für die Strömungslenkung dienende Rück- oder Prallwand der Haube bis an den bezüglich der Strömungsrichtung des Abgases hinteren Rand der Einströmöffnung geführt.

Über die Form einer solchen Haube ist die Ausbildung der Drallströmung beeinflussbar. Gemäß einem ersten Ausführungsbeispiel ist die Haube in einer Abwicklung gesehen trapezförmig ausgeführt, wobei deren der Einströmöffnung gegenüberliegende Wand an die Kontur der Innenwand des Mischergehäuses angepasst ist. Durch die Trapezform verringert sich die von der Haube eingefasste Querschnittsfläche in Richtung zum Drallrohrinneren, wodurch der Abgasstrom eine Beschleunigung erfährt.

In einer anderen Ausgestaltung ist die zumindest eine Haube von ihrer Mündung zu ihrem rückseitigen Ende hin konisch ausgeführt. Dieses erlaubt eine Ausbildung der Hauben mit einer geringeren Höhe, sodass die Einströmöffnungen bei Vorsehen eines etwa halbkugelförmigen Mischergehäuses näher an den Dosierflansch herangerückt werden können. Infolge dessen kann das Mischergehäuse kompakter ausgelegt werden.

In einem Ausführungsbeispiel ist das Mischergehäuse halbkugelförmig ausgeführt, wodurch das Mischergehäuse nur einen sehr geringen Einbauraum benötigt. Zudem erlaubt dieses eine Anordnung der Einrichtung in unterschiedlichen Raumlagen. Eine solche Ausgestaltung ist möglich, da die Drallströmung innerhalb des Dosierrohres erzeugt wird. Die halbkugelförmige innere Mantelfläche des Mischergehäuses vermeidet strömungstechnische Toträume, die aufgrund der darin entstehenden Turbulenzen den Strömungswiderstand erhöhen würden. Zudem erfährt der Abgasstrom durch diese Auslegung des Mischergehäuses, bei der die Öffnung des halbkugelförmigen Mischergehäuses die Eintrittsöffnung ist, eine gewisse Querschnittsflächenreduzierung und damit bereits eine gewisse Beschleunigung, bevor er in die zumindest eine Einströmöffnung des Dosierrohres eingelenkt wird. Das das Mischergehäuse in seinem Zentrum querende Dosierrohr teilt gewissermaßen den Abgasstrom. Durch die Anströmung des Dosierrohres mit dem Abgasstrom wird die im Abgasstrom mitgeführte Wärme effektiv auf das Dosierrohr übertragen, was wiederum einem Niederschlag von Precursortröpfchen, auch durch Kondensation auf der Innenseite des Dosierrohres entgegenwirkt. Aus diesem Grunde kann das typischerweise am Ausgang eines ersten Abgasreinigungsaggregates, beispielweise einem Partikelfilter, gegebenenfalls mit einem vorgeschalteten Oxidationskatalysator vorhandene Umlenkgehäuseteil genutzt werden, um darin das Dosierrohr unterzubringen und somit dieses Gehäuseteil zum Gegenstand einer erfindungsgemäßen Zuführeinrichtung zu verwenden. Dadurch lässt sich dieses von seinem Bauraum her ohnehin vorhandene Bauteil geschickterweise für die flüssige Precursordosierung nutzen, ohne nennenswert mehr Bauraum benötigen zu müssen.

Eine weitere Beschleunigung des Abgasstromes zum Erzeugen der Drallströmung wird gemäß einer Ausgestaltung dadurch erreicht, dass die zumindest eine Einströmöffnung in einer Abwicklung der Mantelfläche des Dosierrohres eine trapezförmige Umrissgeometrie aufweist, wobei die kürzere Seite dieser Grundrissgeometrie bezüglich der Strömungsrichtung des Abgases der hintere, der Längserstreckung des Dosierrohres folgende Rand ist. Bei zumindest einer Einströmöffnung befindet sich die dieser Einströmöffnung zugeordnete Haube innerhalb des Mischergehäuses. Typischerweise, vor allem wenn das Mischergehäuse eine halbkugelförmige innere Oberfläche aufweist, folgt die Kontur der Haube der Innenkontur des Mischergehäuses. Dabei ist erfindungsgemäß vorgesehen, dass zwischen der Haube und der inneren Mantelfläche des Mischergehäuses ein Spalt verbleibt. In diesem wird der anströmende Abgasstrom, soweit dieser durch die Haube nicht durch die Einströmöffnung in das Dosierrohr gelenkt wird, ebenfalls etwas beschleunigt und umströmt außenseitig die Haube sowie das Dosierrohr. Hierdurch wird auch außenseitig bezüglich des Dosierrohres eine gewisse Drallströmung erzeugt. Dieses unterstützt die allseitige Erwärmung des Dosierrohres, vor allem in seinem Abschnitt zwischen den durch die Hauben überdeckten Einströmöffnungen und der den Dosierrohrumströmungsraum in Richtung zum zweiten Ende des Dosierrohres begrenzenden Wand. Zudem erlaubt dieses die Auslegung eines Dosierrohres mit beispielsweise zwei Einströmöffnungen, die einander typischerweise diametral gegenüberliegend zur Längsachse des Dosierrohres angeordnet sind. Über die Haube dieser zweiten Einströmöffnung wird sodann dieser das Dosierrohr umstreichende Abgasstrom eingefangen und der Drallströmung innerhalb des Dosierrohres zugeführt. Ebenfalls kann eine solche Einrichtung mit mehr als zwei Einströmöffnungen, beispielsweise vier Einströmöffnungen ausgestattet sein. Die Anzahl der Einströmöffnungen sollte sechs bis acht nicht überschreiten. Ist die Anzahl der Einströmöffnungen größer, ist der Energieeintrag zum Ausbilden der Abgasdrallströmung gering. Bevorzugt ist eine Ausgestaltung mit zwei bis vier Einströmöffnungen.

Das Mischergehäuse ist gemäß einer Ausgestaltung zweiteilig ausgeführt. Das Dosierrohr befindet sich mit seiner Längsachse gemäß einer Ausgestaltung im Bereich der Naht der beiden Mischergehäuseteile. Dieses erlaubt eine einfache Integration des Dosierrohrs in das Mischergehäuse. Typischerweise ist das Mischergehäuse außenseitig mit einer thermischen Isolierung zur Wärmekonservierung ausgerüstet. Bei einer solchen Auslegung des Mischergehäuses bzw. der Zuführeinrichtung kann die zumindest eine Haube außerhalb des Mischergehäuses auf dem Dosierrohr montiert werden.

In einer anderen Ausgestaltung ist das Mischergehäuse einteilig ausgeführt und das Dosierrohr darin eingesteckt. Die zumindest eine Haube wird bei einer solchen Auslegung auf dem Dosierrohr montiert, wenn dieses bereits in das Mischergehäuse eingesteckt ist.

Die Konzeption des Mischergehäuses mit einer Eintrittsöffnung deren Querschnittsfläche deutlich größer ist als die Querschnittsfläche des Dosierrohres kann diese größere Querschnittsfläche genutzt werden, um das Mischergehäuse unmittelbar an den Ausgang eines dem Mischer in Strömungsrichtung des Abgases vorgeschalteten Abgasreinigungsaggregates anzuschließen. Bei einem solchen Abgasreinigungsaggregat kann es sich um einen Partikelfilter oder um einen Oxidationskatalysator handeln. Besonders vorteilhaft ist vor diesem Hintergrund die Auslegung des Mischergehäuses mit einer halbkugelförmigen Geometrie, da dann die Eintrittsöffnung kreisrund ist, wie dieses typischerweise auch die Umrissgeometrie des Gehäuses eines Abgasreinigungsaggregates ist. Die Durchmesser des Mischergehäuses und des diesem vorgeschalteten Abgasreinigungsaggregates sind aufeinander abgestimmt. Aus diesem Grunde können ansonsten verwendete konische Gehäuseteile und Abgasstrangabschnitte zwischen den Aggregaten vermieden werden, was wiederum zu einer Reduzierung des benötigten Einbauraumes beiträgt.

Gemäß einer bevorzugten Ausgestaltung ist die beschriebene Einrichtung Teil einer Abgasreinigungsanlage, mit der die im Abgasstrom mitgeführten Stickoxide reduziert werden. Der Einrichtung ist dann in Strömungsrichtung des Abgases ein SCR-Katalysator nachgeschaltet.

Die vorbeschriebene Einrichtung lässt sich für alle mit Luftüberschuss arbeitenden Verbrennungsmotoren einsetzen, so beispielsweise auch bei Gasmotoren oder bei Wasserstoffmotoren.

Die Erfindung ist nachfolgend anhand von Ausführungsbeispielen unter Bezugnahme auf die beigefügten Figuren beschrieben. Es zeigen:
- **Fig. 1:**: eine schematisierte Darstellung einer in den Abgasstrang einer Dieselbrennkraftmaschine eingeschalteten, nicht erfindungsgemäßen Abgasreinigungsanlage mit einer Zuführeinrichtung zum Zuführen eines chemischen Reduktionsmittels,
- **Fig. 2:**: eine perspektivische Ansicht der Zuführeinrichtung der Figur 1 aus einer ersten Richtung,
- **Fig. 3:**: eine perspektivische Ansicht der Zuführeinrichtung der Figur 1 aus einer anderen Richtung zum Gewähren eines Einblickes in die Zuführeinrichtung,
- **Fig. 4:**: eine perspektivische Darstellung nach Art einer Explosionsdarstellung der Zuführeinrichtung der Figuren 2 und 3,
- **Fig. 5:**: eine Frontan- bzw. -einsicht in die Eintrittsöffnung der Zuführeinrichtung der vorangegangenen Figuren,
- **Fig. 6:**: einen Schnitt entlang der Linie A - A der Figur 5 durch die Zuführeinrichtung,
- **Fig. 7:**: eine Zuführeinrichtung entsprechend derjenigen der vorangegangenen Figuren gemäß einem weiteren, nicht erfindungsgemäßen Beispiel in einer perspektivischen Ansicht zum Gewähren eines Einblickes in diese Zuführeinrichtung,
- **Fig. 8:**: eine Schnittdarstellung entsprechend derjenigen der Figur 6 durch die Zuführeinrichtung der Figur 7,
- **Fig. 9:**: eine Frontan- bzw. -einsicht in die Eintrittsöffnung einer erfindungsgemäßen Zuführeinrichtung,
- **Fig. 10:**: das Drallrohr der Zuführeinrichtung der Figur 9 in einer perspektivischen Alleindarstellung,
- **Fig. 11:**: eine Frontan- bzw. -einsicht in die Eintrittsöffnung einer Zuführeinrichtung gemäß noch einem weiteren erfindungsgemäßen Ausführungsbeispiel,
- **Fig. 12:**: eine Schnittdarstellung durch die Zuführeinrichtung der Figur 11 im Bereich der Mitte der die Einströmöffnungen bedeckenden Hauben,
- **Fig. 13:**: eine Längsschnittdarstellung durch die Zuführeinrichtung der Figur 11,
- **Fig. 14:**: eine perspektivische Außenansicht einer Zuführeinrichtung gemäß noch einem weiteren Ausführungsbeispiel der Erfindung,
- **Fig. 15:**: eine Frontan- bzw. -einsicht in die Eintrittsöffnung der Zuführeinrichtung der Figur 14,
- **Fig. 16:**: ein weiteres Ausführungsbeispiel einer erfindungsgemäßen Zuführeinrichtung in einer Frontan- bzw. -einsicht in seine Eintrittsöffnung und
- **Fig. 17:**: ein weiteres Ausführungsbeispiel einer erfindungsgemäßen Zuführeinrichtung in einer Frontan- bzw. -einsicht in seine Eintrittsöffnung.

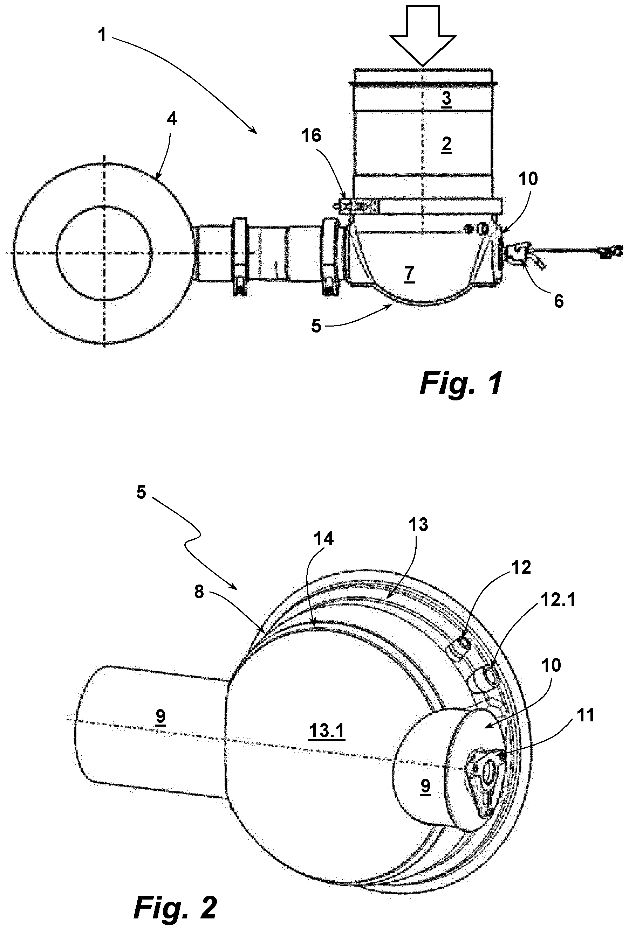

Bei der in Figur 1 beispielhaft dargestellten Abgasreinigungsanlage 1 ist diese in den Abgasstrang eines nicht näher dargestellten Kraftfahrzeugdieselmotors eingeschaltet. Die Abgasreinigungsanlage 1 umfasst bei dem dargestellten Ausführungsbeispiel einen Partikelfilter 2, einen diesem in Strömungsrichtung des Abgases vorgeschalteten Oxidationskatalysator 3 und einen SCR-Katalysator 4. Zwischen dem Partikelfilter 2 und dem SCR-Katalysator 4 ist eine Einrichtung zum Zuführen eines Reduktionsmittels, hier: wässrige Harnstofflösung, in den Abgasstrang bzw. den diesen durchströmenden Abgasstrom eingeschaltet. Diese Zuführeinrichtung ist in Figur 1 mit dem Bezugszeichen 5 kenntlich gemacht. Die Zuführeinrichtung 5 umfasst eine Dosiereinheit 6, die in nicht näher dargestellter Art und Weise an einen Reduktionsmittelvorrat, eine Druckluftzufuhr und an ein Steuergerät zum Steuern der Reduktionsmittelzufuhr angeschlossen. Die Zuführeinrichtung verfügt über ein durch eine thermische Isolierung 7 bedecktes kugelförmiges Mischergehäuse 8 (s. Figur 2). Teil der Zuführeinrichtung 5 ist ein Dosierrohr 9, das das Mischergehäuse 8 durchgreift. Das Dosierrohr 9 ist bei dem dargestellten Beispiel ein Zylinderrohr. Das erste Ende des Dosierrohres 9 ist mit einer Verschlussplatte 10 verschlossen. An die Verschlussplatte 10 ist die Dosiereinheit 6 angeschlossen. Zu diesem Zweck trägt die Verschlussplatte 10 einen Dosiereinheitsanschluss 11. Das Dosierrohr 9 ist auf der der Verschlussplatte 10 gegenüberliegenden Seite aus dem Mischergehäuse 8 und seiner Isolierung 7 herausgeführt und an den zum SCR-Katalysator 4 führenden Abgasstrangabschnitt angeschlossen. Aus dem zweiten Ende des Dosierrohres 9 strömt das mit dem über die Dosiereinheit 6 eingespritzten Reduktionsmittel angereicherte Abgas aus und in den SCR-Katalysator 4 ein.

Das Mischergehäuse 8 trägt Stutzen 12, 12.1 für einen Temperatursensor bzw. einen Drucksensor. Diese Sensoren sind ausgelegt, die Temperatur und den Druck innerhalb des Mischergehäuses 8 zu erfassen. Die Sensoren sind in den Figuren nicht gezeigt. Das Mischergehäuse 8 des dargestellten Beispiels verfügt an diametral gegenüberliegenden Seiten über jeweils zwei Stutzen 12, 12.1. Je nach Bedarf und dem zur Verfügung stehenden Bauraum können die Sensoren an der einen oder an der anderen Seite des Mischergehäuses 8 angeordnet werden.

Das Mischergehäuse 8 ist bei dem dargestellten Beispiel zweiteilig ausgeführt und verfügt über ein erstes Mischergehäuseteil 13 und ein zweites Mischergehäuseteil 13.1. Der sich in der Teilungsebene des Mischergehäuses 8 befindliche Verbindungsabschnitt der beiden Mischergehäuseteile 13, 13.1 ist in Figur 1 mit dem Bezugszeichen 14 kenntlich gemacht. Der Verbindungsabschnitt 14 befindet sich in der Ebene der Längserstreckung des Dosierrohres 9.

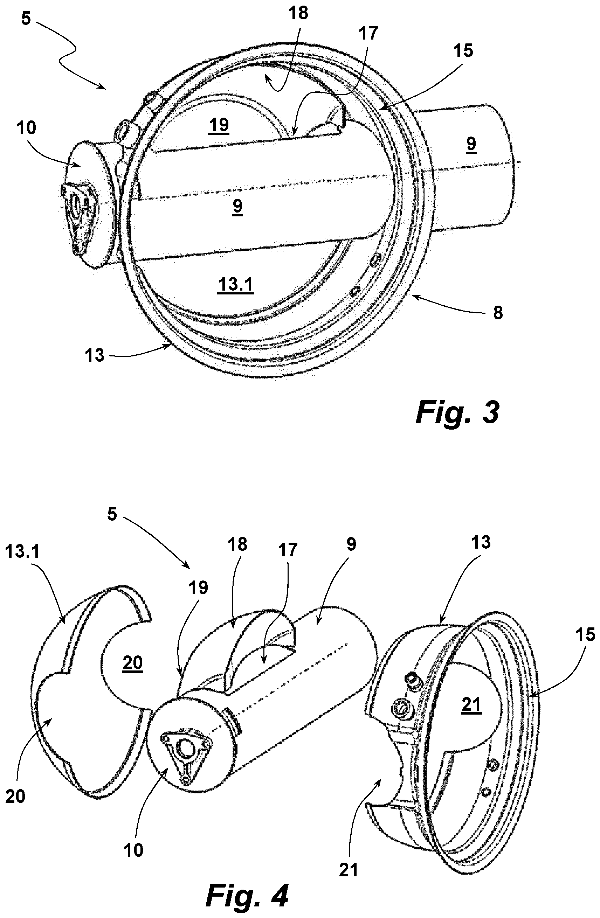

Die Auslegung und Anordnung des Dosierrohres 9 mit seinem Durchgriff durch das Mischergehäuse 8 ist in Figur 3 erkennbar. Figur 3 gestattet einen Einblick in das Innere des Mischergehäuses 8 durch seine Eintrittsöffnung 15, durch die das aus dem Partikelfilter 2 ausströmende Abgas in die Zuführeinrichtung 5 einströmt. Die Zuführeinrichtung 5 ist mit dem Gehäuse des Partikelfilters 2 durch eine Spannschelle 16 (s. Figur 1) verbunden. Der Anschluss der Zuführeinrichtung 5 an das Gehäuse des Partikelfilters 2 erfolgt ohne Zwischenstücke. Der Durchmesser der Eintrittsöffnung 15 der Zuführeinrichtung 5 ist an den Gehäusedurchmesser des Partikelfilters 2 angepasst.

Das Dosierrohr 9 verfügt bei dem dargestellten Beispiel über eine einzige Einströmöffnung 17. Hierbei handelt es sich um eine Durchbrechung in dem Dosierrohr 9, die sich in Längserstreckung des Dosierrohres weitestgehend über den Abschnitt des Dosierrohres 9 erstreckt, mit dem dieser das Innere des Mischergehäuses 8 durchquert. In Umfangsrichtung gesehen erstreckt sich diese Einströmöffnung 17 über etwa 95°. Bedeckt ist diese Einströmöffnung 17 durch eine Haube 18. Die Haube 18 ist dreiseitig mit der Mantelfläche des Dosierrohres 9 verschweißt. Die Mündung der Haube 18 weist in Richtung der Eintrittsöffnung 15. Auf diese Weise ist die Einströmöffnung 17 an drei aneinandergrenzenden Seiten von der Haube 18 eingefasst und mit der Mantelfläche des Dosierrohres 9 verschweißt. Dieses sind die beiden in Längsrichtung des Dosierrohres 9 weisenden Wände der Haube 18 sowie ihre Rückwand bzw. Prallwand 19. Bei dem dargestellten Ausführungsbeispiel ist die Haube 18 zunächst unabhängig von dem Dosierrohr 9 hergestellt worden. Seine an die Mantelfläche des Dosierrohres 9 grenzenden Wandbereiche sind mit dem Dosierrohr 9 verschweißt. Das Mischergehäuse 8 ist für eine vereinfachte Montage des Dosierrohres 9 mit seiner Haube 18 zweiteilig ausgeführt. Beide Mischergehäuseteile 13, 13.1 verfügen an bezüglich der Mittellängsachse des Mischergehäuses 8 diametral gegenüberliegenden Seiten jeweils über eine Dosierrohraufnahme 20 bzw. 21. Bei den beschriebenen Einzelteilen handelt es sich sämtlich um Edelstahlteile.

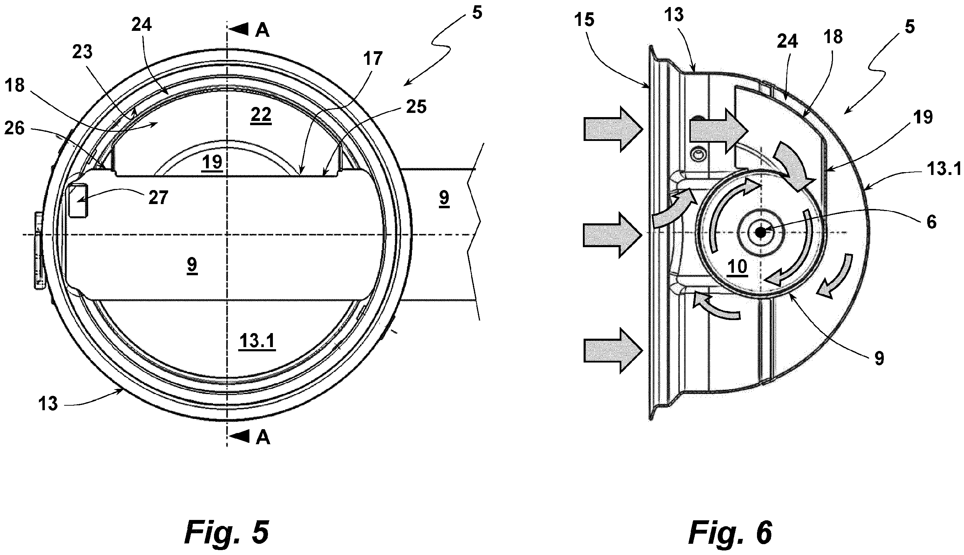

Aufgrund der halbkugelförmigen Innenkontur des Mischergehäuses 8 ist die Haube 18 an diese Krümmung in zwei Richtungen angepasst, wie dieses aus den Figuren 5 und 6 zu erkennen ist. Zwischen dem Dach 22 der Haube 18 und der Innenwand 23 des Mischergehäuses 8 verbleibt ein Spalt 24, durch den durch die Eintrittsöffnung 15 in das Mischergehäuse 8 einströmendes Abgas auch an der Haube 18 außenseitig vorbeiströmen kann.

Die vordere Kante 25 der Einströmöffnung 17 befindet sich, wie aus Figuren 5 und 6 erkennbar, vor dem in Figur 5 erkennbaren haubenseitigen Scheitel 26. Dieses begünstigt die Ausbildung einer Drallströmung im Inneren des Dosierrohres 9. Das Dosierrohr 9 quert den Innenraum des Mischergehäuses 8 mittig.

Das Dosierrohr 9 verfügt in unmittelbarer Nachbarschaft zu der Verschlussplatte 10, die auch als Dosierflansch angesprochen werden kann, über eine Spülöffnung 27. Die Spülöffnung 27 bei diesem Beispiel ist rechteckförmig ausgelegt. Die Spülöffnung 27 dient zum Einleiten eines Teils des das Dosierrohr 9 mantelflächenseitig anströmenden Abgases, um dieses an dem bzw. den Injektordüsenausgängen der Dosiereinheit 6 vorbeistreichen zu lassen. Hierdurch wird wirksam eine Ablagerung von Precursortröpfchen vermieden.

Schematisiert ist in der Schnittdarstellung der Figur 6 der Strömungsverlauf des aus dem Partikelfilter 2 austretenden und durch die Eintrittsöffnung 15 in das Mischergehäuse 8 der Zuführeinrichtung 5 eintretenden Abgasstroms kenntlich gemacht. Durch die kreisrunde Eintrittsöffnung 15 tritt der Abgasstrom über die gesamte Fläche der Eintrittsöffnung 15 in das Mischergehäuse 8 der Zuführeinrichtung 5 ein. Das auf die Mantelfläche des Dosierrohres 9 auftreffende Abgas erwärmt das Dosierrohr 9, sollte dieses noch nicht die Temperatur des Abgasstromes aufweisen. Durch die Haube 18 wird ein Großteil des Abgasstromes durch die Einströmöffnung 17 in das Innere des Dosierrohres 9 eingelenkt. Diese Zufuhr des Abgasstromes in das Dosierrohr 9 erfolgt exzentrisch (s. Figur 6), so dass in dem Dosierrohr 9 eine Drallströmung, wie durch die Blockpfeile in Figur 6 kenntlich gemacht, erzeugt wird. Aufgrund der Querschnittsflächenverringerung zwischen der Querschnittsfläche der Eintrittsöffnung 15 und der Querschnittsfläche der den Abgasstrom in das Dosierrohr 9 lenkenden Haube 18 bzw. der Einströmöffnung 17 erfährt der in das Dosierrohr 9 einströmende Abgasstrom seine Beschleunigung. Dieses wird gewünscht, um innerhalb des Dosierrohres 9 eine hinreichend energiereiche Strömung als Drallströmung zu erzeugen, durch die aus der Dosiereinheit 6 axial in das Dosierrohr 9 eingespritzte Reduktionsmitteltröpfchen (wässrige Harnstofflösung) mitgerissen und aus diesen das eigentliche Reduktionsmittel Ammoniak freigesetzt wird. Dieser Prozess wird durch die plötzliche Geschwindigkeitserhöhung, den die durch die Dosiereinheit 6 eingespritzten Harnstofflösungströpfchen bei dem Zusammentreffen mit dem mit hoher Geschwindigkeit in das Dosierrohr 9 einströmenden Abgasstrom erfahren, begünstigt. Die Drallströmung setzt sich von der Verschlussplatte 10 in Richtung zu dem anderen Ende des Dosierrohres 9 schraubenlinienförmig fort. Dabei hat die Drallströmung ihre größte Geschwindigkeit benachbart zu der Innenwand des Dosierrohres 9.

Das Abgas, welches durch den Spalt 24 an der Haube 18 vorbeiströmt, strömt, wie in der Darstellung der Figur 6 schematisiert kenntlich gemacht, um das Dosierrohr 9 herum. In Abhängigkeit von dem einströmenden Abgasvolumenstrom kann dieses dazu führen, dass sich auch bereits außerhalb des Dosierrohres 9 eine gewisse Drallströmung ausbildet, jedoch mit deutlich geringerer Geschwindigkeit als innerhalb des Dosierrohres 9. Diese bewirkt aufgrund ihrer Beschleunigung, den dieser Abgasteilstrom beim Umströmen der Haube 18 erfährt, dass das im unteren Bereich in das Mischergehäuse 8 einströmende Abgas das Dosierrohr 9 nicht unterseitig umströmt, sondern dieses Abgas in Richtung zur Haube ablenkt.

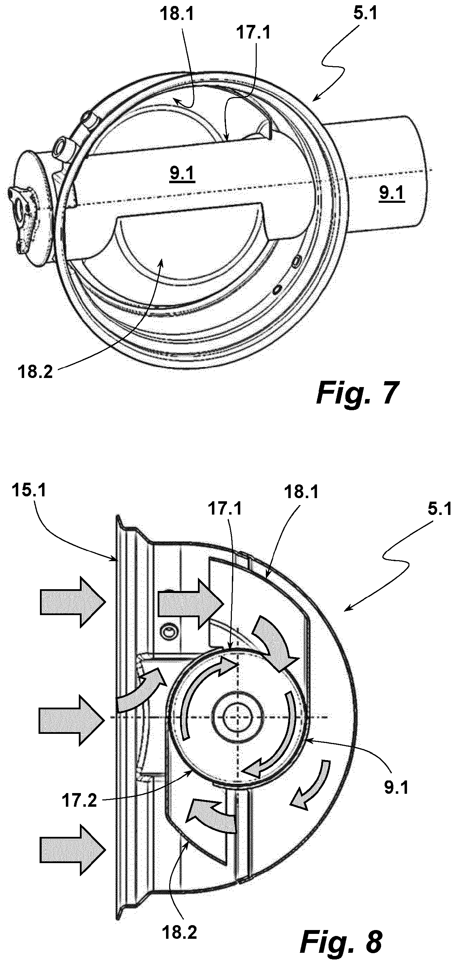

Figuren 7 und 8 zeigen eine weitere Zuführeinrichtung 5.1, die prinzipiell aufgebaut ist, wie die in den vorangegangenen Figuren beschriebene Zuführeinrichtung 5. Insofern gelten die vorstehenden Ausführungen, soweit nachstehend nicht anders erläutert, gleichermaßen für die Zuführvorrichtung 5.1. In den Figuren 7 und 8 sind bezüglich der Zuführvorrichtung 5.1 gleiche Elemente bzw. Bauteile mit denselben Bezugszeichen wie zu der Zuführeinrichtung 5 verwendet, kenntlich gemacht, um einen Suffix ".1" oder einen entsprechend höheren Zähler (z.B. ".2"), wenn das Suffix ".1" bereits in dem Ausführungsbeispiel der Figuren 1 bis 6 verwendet wurde.

Die Zuführeinrichtung 5.1 unterscheidet sich von der Zuführeinrichtung 5 nur dadurch, dass diese zwei einander diametral gegenüberliegende Einströmöffnungen 17.1, 17.2 und dementsprechend auch zwei Hauben 18.1, 18.2 aufweist. Die Hauben 18.1, 18.2 sind, wie aus der Schnittdarstellung der Figur 8 erkennbar, bezüglich der Umfangsrichtung des Dosierrohres 9.1 gleichsinnig mit ihrer Haubenmündung orientiert, damit die dadurch in das Dosierrohr eingelenkten Abgasteilströme aufgrund ihres exzentrischen Eintrittes in Drehrichtung der Drallströmung eintreten. Während die Einströmöffnung 17.1 mit ihrer Haube 18.1 genauso konzipiert ist, wie die Einströmöffnung 17 und die Haube 18 der Zuführeinrichtung 5, weist die zweite Einströmöffnung 17.2 der Zuführeinrichtung 5.1 eine geringere Querschnittsfläche auf als diejenige der Einströmöffnung 17.1. Bei dem dargestellten Ausführungsbeispiel ist das in Umfangsrichtung sich erstreckende Mantelflächensegment, über welches sich die Einströmöffnung 17.2 erstreckt kürzer als dasjenige der Einströmöffnung 17.1. Die Einströmöffnung 17.2 ist um einige Winkelgrade geringer als 90°. Durch die Haube 18.2 wird der an der Haube 18.1 vorbeistreichende Abgasstromanteil weitestgehend eingefangen und ebenfalls exzentrisch in das Innere des Dosierrohres 9 durch die Einströmöffnung 17.2 gelenkt. Die im Inneren des Dosierrohres 9.1 sich einstellende Drallströmung ist ähnlich energiereich wie diejenige, die sich in dem Dosierrohr 9 einstellt. Daher sind die Geschwindigkeitsgleichverteilungswerte sowie die Gleichverteilungswerte des darin mitgeführten Reduktionsmittels quasi identisch mit denjenigen, die vorstehend zu der Zuführeinrichtung 5 beschrieben ist.

Bei dem in den Figuren dargestellten Beispiel ist das Mischergehäuse 8 halbkugelförmig ausgeführt. Auch wenn eine solche Ausführung des Mischergehäuses zweckmäßig ist und das Dosierrohr, damit dieses eine möglichst lange Erstreckung innerhalb des Mischergehäuses hat, dieses mittig durchquert, kann das Dosierrohr das Mischergehäuse auch außermittig queren. Dieses ist insbesondere bei Ausgestaltungen ohne Einbuße an die innerhalb des Mischergehäuses befindliche Länge des Dosierrohres möglich, wenn das Mischergehäuse eine von der kreisrunden Grundflächengeometrie abweichende Geometrie, beispielsweise eine quadratische oder rechteckförmige Grundflächengeometrie aufweist.

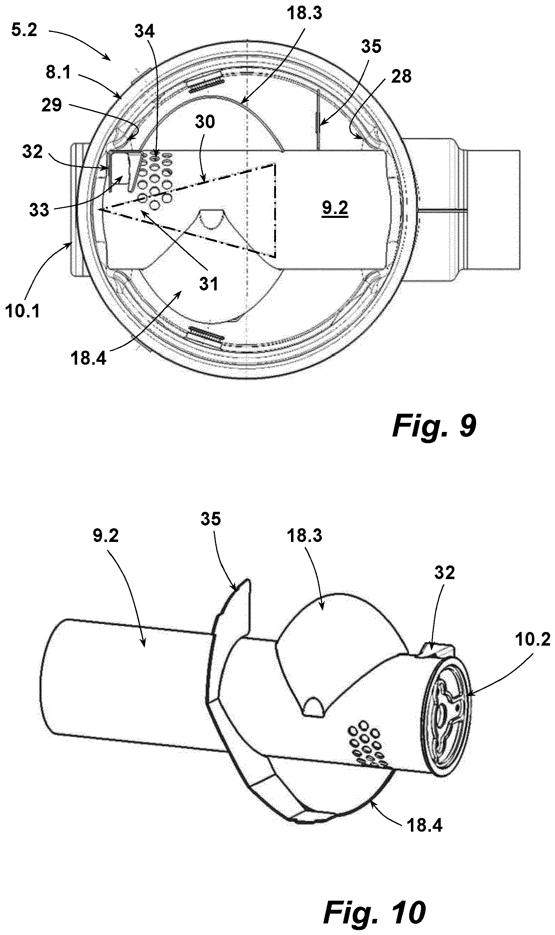

Figur 9 zeigt ein erfindungsgemäßes Ausführungsbeispiel einer Zuführeinrichtung 5.2, die prinzipiell aufgebaut ist, wie die Zuführeinrichtung 5.1. Bei der Zuführeinrichtung 5.2 befinden sich die beiden Einströmöffnungen im Unterschied zu der Zuführeinrichtung 5.1 außermittig bezüglich des Dosierrohres 9.2 in seinem innerhalb des Mischergehäuses 8.1 befindlichen Abschnitt. Die die Einströmöffnungen des Dosierrohres 9.2 bedeckenden schaufelartigen Hauben 18.3, 18.4 sind in einer Abwicklung V-förmig und somit konisch in Richtung zu dem ihrer Mündung gegenüberliegenden Ende. Aufgrund der außermittigen Anordnung der Hauben 18.3, 18.4 bzw. der darunter befindlichen Einströmöffnungen ist der Abstand des dosierrohrseitigen Abschlusses der Hauben 18.3, 18.4 zu der den das Dosierrohr 9.2 umgebenden Dosierrohrumströmungsraum begrenzende Wand 28 in Richtung zu dem zweiten Ende des Dosierrohres 9.2 hin deutlich größer als der Abstand des gegenüberliegenden Abschlusses der Hauben 18.3, 18.4 zu dem der gegenüberliegenden Wand 29. Bei den Wänden 28, 29 handelt es sich jeweils um Wandabschnitte, da die Innenwand des Mischergehäuses 8.1 durch eine durchgehende Wand gebildet ist. Die Beabstandung der Hauben 18.3, 18.4 von der Wand 28 ist bei dem dargestellten Ausführungsbeispiel etwa fünfmal so groß wie der Abstand zur Wand 29. Der Abschnitt des Dosierrohres 9.2, der in Strömungsrichtung des Abgases durch das Dosierrohr 9.2 auf die Einströmöffnungen folgt, ist direkt von dem durch die Eintrittsöffnung einströmenden Abgas angeströmt. Dieses strömt das Dosierrohr 9.2 in diesem Abschnitt nicht nur an, sondern umströmt dieses auch. Daher ist dieser Abschnitt des Dosierrohres 9.2 besonders gut erwärmt mit der Folge, dass sich unter Umständen innenwandseitig abgesetztes oder sich absetzendes flüssiges Reaktionsmittel bei entsprechender Temperatur des Abgases unverzüglich verdampft.

Eingetragen ist in Figur 9 strichpunktiert der Sprühkegel 30 der an die Verschlussplatte 10.1 angeschlossenen Dosiereinheit 6. Der Sprühkegel 30 ist mit einem solchen Winkel ausgelegt, dass von der Dosiereinheit 6 eingespritzte Precursortröpfchen erst hinter den Einströmöffnungen an die Innenwand des Dosierrohres 9.2 gelangen, sollten diese nicht bei einem Betrieb der Zuführeinrichtung 5.2 durch die Drallströmung bereits als Schwebfracht aufgenommen sein. Bei dem dargestellten Ausführungsbeispiel beträgt der Sprühwinkel etwa 30°. Bei diesem Ausführungsbeispiel wird die sich in Strömungsrichtung des Abgases innerhalb des Dosierrohres 9.2 hinter den durch die Einströmhauben 18.3, 18.4 befindliche Rohrinnenwandung genutzt, damit Precursortröpfchen daran auftreffen und aufgrund der Aufprallenergie in kleinere Tröpfchen zerteilt werden. Kleine Tröpfchen verdampfen aufgrund ihrer relativ größeren Oberfläche rascher. Zudem verdampfen diese auch an der erwärmten Innenwand dieses Dosierrohrabschnittes. Durch diese Maßnahme kann ohne den Abgasgegendruck zu erhöhen, das Freisetzen des in dem Precursor enthaltenen Ammoniaks als Reduktionsmittel optimiert und somit die notwendige Strömungsstrecke zum Freisetzen des Reduktionsmittels und zum Erzielen der gewünschten Gleichverteilung nochmals reduziert werden.

Auch die Zuführeinrichtung 5.2 verfügt über eine Spülöffnungsanordnung 31. Die Spülöffnungsanordnung 31 umfasst eine mit einer Haube 32 versehene Spülöffnung 33, die sich außerhalb der Haube 18.3 befindet, deren Mündung in Strömungsrichtung des Abgases weist. Weitere Spülöffnungen 34 befinden sich nach Art eines durch kreisrunde Öffnungen gebildeten Rasters in der Flucht der Mündung der Hauben 18.3, 18.4. Diese dienen auch zum Reduzieren des Druckverlustes.

Eingesetzt in den Dosierrohrumströmungsraum ist bei diesem Ausführungsbeispiel ein Leitblech 35, welches sich um die Rückseite des Dosierrohres 9.2 herum erstreckt (s. Figur 10). Die Erstreckung des Leitbleches 35 ist besser in der Alleindarstellung des Dosierrohres 9.2 erkennbar, die das Dosierrohr aus entgegengesetzter Blickrichtung zeigt wie in Figur 9. Das Leitblech 35 dient zum Zuführen von Abgas durch den Dosierrohrumströmungsraum zu der Mündung der Haube 18.4. Aufgrund dieser Maßnahme strömt bei dem dargestellten Ausführungsbeispiel etwa 60% des anströmenden Abgases durch die Haube 18.3 und die dieser zugeordneten Einströmöffnung in das Innere des Dosierrohres 9.2, während durch die der Haube 18.4 zugeordnete Einströmöffnung nur 40% des Abgases in das Innere des Dosierrohres 9.2 gelenkt wird.

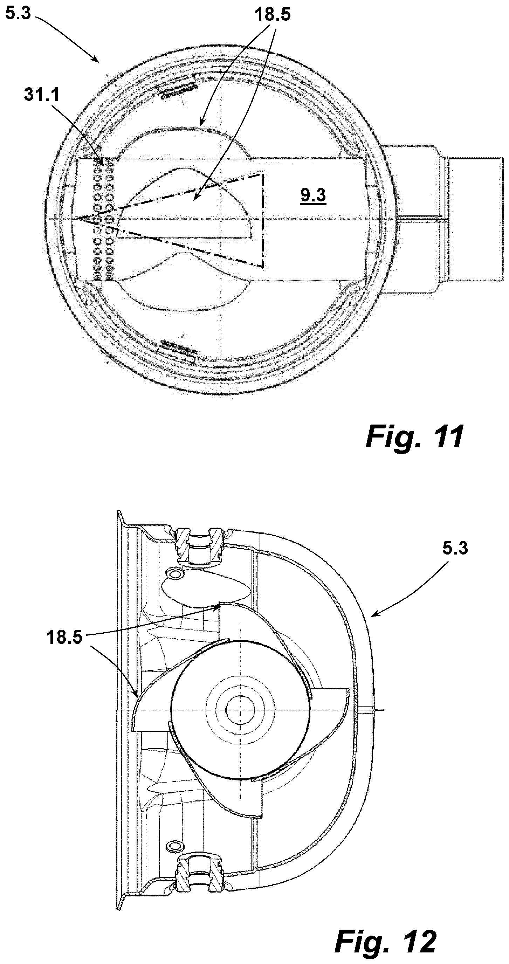

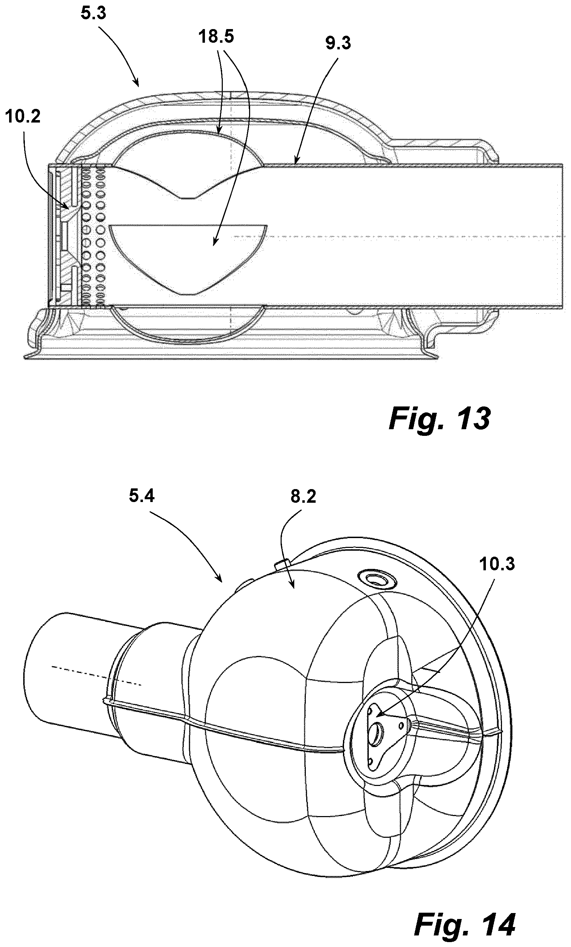

Figur 11 zeigt ein weiteres Ausführungsbeispiel einer Zuführeinheit 5.3. Diese verfügt über vier Hauben 18.5 und dementsprechend darunter angeordnete Einströmöffnungen, die einen Winkelabstand von 90° zueinander aufweisen (s. Schnittdarstellung der Figur 12). Die die Dosiereinheit tragende Verschlussplatte ist bei diesem Ausführungsbeispiel in das Dosierrohr 9.3 eingeführt, wie dieses in der Längsschnittdarstellung der Figur 13 erkennbar ist. Die Verschlussplatte ist darin mit dem Bezugszeichen 10.2 kenntlich gemacht. Eine solche Anordnung der Verschlussplatte 10.2, namentlich die Integration dieser in das erste Ende des Dosierrohres hinein, kann auch bei anderen Ausführungsbeispielen vorgesehen sein. Diese Ausgestaltung ist nicht an die weiteren Merkmale der Zuführeinrichtung 5.3 gebunden.

In Richtung zur Verschlussplatte 10.2 benachbart zu der Anordnung der Hauben 18.5 ist eine Spülöffnungsanordnung 31.1 ringförmig ausgeführt, und zwar bei dem dargestellten Ausführungsbeispiel durch zwei ringförmige Lochreihen (s. Figur 11). Diese dienen der innenseitigen Spülung der Verschlussplatte 10.2 bzw. der durch diese hindurchragenden Injektoren der in dieser Figur nicht dargestellten Dosiereinheit und gleichermaßen zur Reduzierung des Druckverlustes. Anstelle der Querschnittsgeometrie der Spülöffnungen dieser Spülöffnungsanordnung 31.1 können auch langlochartige Öffnungen vorgesehen sein.

Bei der Zuführeinrichtung 5.3 sind die Hauben 18.5 und die darunter befindlichen Einströmöffnungen, wie aus Figur 12 ersichtlich, so angeordnet, dass die Mündung der in Figur 12 dargestellten oberen Haube 18.5 entgegen der Einströmrichtung des Abgases weist. Anstelle einer solchen Ausrichtung der Hauben 18.5 können diese auch eine Ausrichtung aufweisen, die gegenüber der Ausrichtung bei der Zuführeinrichtung 5.3 um 45° gegen oder mit dem Uhrzeigersinn gedreht sind.

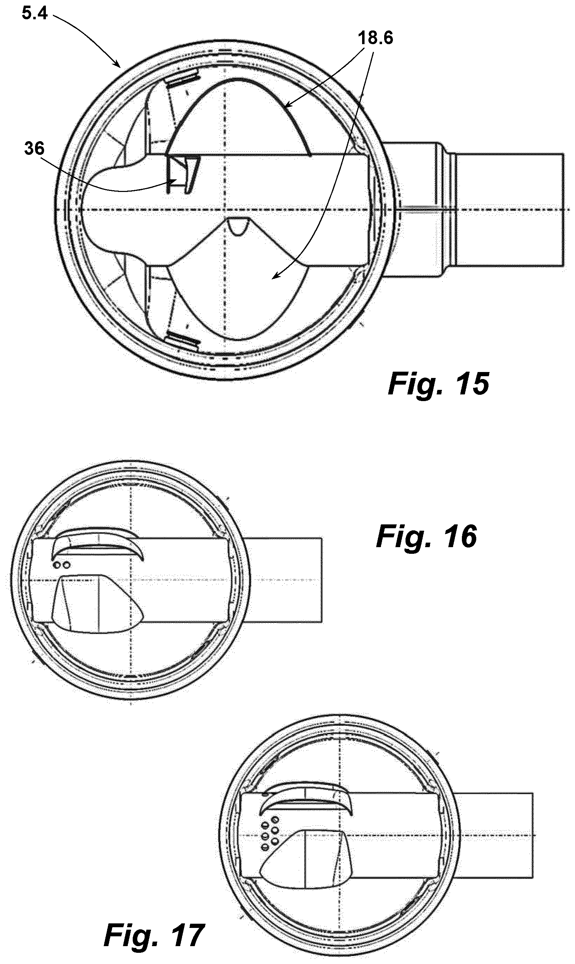

Noch ein weiteres Ausführungsbeispiel einer Zuführeinrichtung 5.4 ist in Figur 14 gezeigt. Dieses Ausführungsbeispiel entspricht demjenigen der Figuren 9 und 11, jedoch mit dem Unterschied, dass das Mischergehäuse 8.2 an der die Verschlussplatte 10.3 aufweisenden Seite eine Einprägung aufweist. Dieses dient dem Zweck, den oder die Injektoren der Dosiereinheit in den Bauraum des Mischergehäuses 8.2 zu integrieren. Die Hauben 18.6 der Zuführeinrichtung 5.4 sind, wie besonders gut aus der Darstellung der Figur 15 erkennbar, konisch ausgebildet, wobei der in Figur 15 erkennbare linke Rand der Hauben 18.6 quasi in der Flucht der Innenseite der Verschlussplatte 10.3 ist. Zusätzlich verfügt die Zuführeinrichtung 5.4 über eine Spülöffnung 36, um einen zusätzlichen Abgasstrom an dem oder den Injektoren der Dosiereinheit vorbeistreichen zu lassen.

Die Zuführeinrichtungen der vorbeschriebenen Ausführungsbeispiele weisen jeweils in Bezug auf ihre Erstreckung in Längsrichtung des jeweiligen Dosierrohres eine symmetrische Auslegung auf. Figuren 16 und 17 zeigen diesbezüglich unterschiedliche Haubengestaltungen. Die Haubengestaltung bei der Zuführeinrichtung gemäß Figur 16 ist ausgelegt, damit das einströmende Abgas in Richtung zu der Innenseite der Verschlussplatte gelenkt wird. Bei der Ausgestaltung der Hauben gemäß Figur 17 wird eintretendes Abgas in Richtung von der Innenseite der Verschlussplatte weggelenkt.

In einer in den Figuren nicht dargestellten Ausgestaltung sind die beiden Haubentypen der Figuren 16 und 17 kombiniert. Bei dieser Ausgestaltung sind diese wechselweise in Umfangsrichtung zueinander angeordnet. Diese Ausführungsbeispiele machen deutlich, dass durch einfache Änderung in der Geometrie der Hauben die Drallausprägung beeinflusst werden kann.

Die vorstehenden Beispiele der Auslegung der Hauben kann unabhängig von den konkret in den Figuren 16 und 17 gezeigten Ausführungsbeispielen auch für sämtliche andere Ausführungsbeispiele, insbesondere die vorgenannten Ausführungsbeispiele eingesetzt werden.

Die Erfindung ist anhand von Ausführungsbeispielen beschrieben worden. Ohne den Umfang der geltenden Ansprüche zu verlassen, ergeben sich für einen Fachmann weitere Möglichkeiten die Erfindung umzusetzen, ohne dass dieses im Rahmen dieser Ausführungen im Einzelnen erläutert werden müsste.

**Bezugszeichenliste**

| | | | |
|---|---|---|---|
| 1 | Abgasreinigungsanlage | 27 | Spülöffnung |
| 2 | Partikelfilter | 28 | Wand |
| 3 | Oxidationskatalysator | 29 | Wand |
| 4 | SCR-Katalysator | 30 | Sprühkegel |
| 5, 5.1, 5.2, 5.3, 5.4 | Zuführeinrichtung | 31, 31.1 | Spülöffnungsanordnung |
| 6 | Dosiereinheit | 32 | Haube |
| 7 | Isolierung | 33 | Spülöffnung |
| 8, 8.1, 8.2 | Mischergehäuse | 34 | Spülöffnung |
| 9, 9.1, 9.2, 9.3 | Dosierrohr | 35 | Leitblech |
| 10, 10.1, 10.2, 10.3 | Verschlussplatte | 36 | Spülöffnung |
| 11 | Dosiereinheitsanschluss | | |
| 12, 12.1 | Stutzen | | |
| 13 | erstes Mischergehäuseteil | | |
| 13.1 | zweites Mischergehäuseteil | | |
| 14 | Verbindungsabschnitt | | |
| 15, 15.1 | Eintrittsöffnung | | |
| 16 | Spannschelle | | |
| 17, 17.1, 17.2 | Einströmöffnung | | |
| 18, 18.1 -18.6 | Haube | | |
| 19 | Rückwand | | |
| 20 | Dosierrohraufnahme | | |
| 21 | Dosierrohraufnahme | | |
| 22 | Dach | | |
| 23 | Innenwand | | |
| 24 | Spalt | | |
| 25 | vorderer Rand | | |
| 26 | Scheitel | | |

## Patentansprüche

1. Einrichtung zum Zuführen eines chemischen Reaktionsmittels in den Abgasstrang einer Brennkraftmaschine, umfassend
- ein Mischergehäuse (8, 8.1, 8.2) mit einer Eintrittsöffnung (15, 15.1), durch die der Abgasstrom in das Mischergehäuse (8, 8.1, 8.2) eintritt,
- ein von dem in das Mischergehäuse (8, 8.1, 8.2) einströmenden Abgasstrom quer angeströmtes Dosierrohr (9, 9.1, 9.2, 9.3) mit einem ersten Ende und mit einem zweiten Ende,
- eine an dem ersten Ende des Dosierrohrs (9, 9.1, 9.2, 9.3) angeordnete, an einen Reaktionsmittelvorrat anschließbare Dosiereinheit (6) zum Ausgeben von Reaktionsmittel in das Dosierrohr (9, 9.1, 9.2, 9.3) und
- Mittel zum Erzeugen einer Drallströmung des Abgasstroms, wobei diese Mittel ausgelegt sind, diese innerhalb des Dosierrohres (9, 9.1, 9.2, 9.3) zu erzeugen und zu diesem Zweck das Dosierrohr (9, 9.1, 9.2, 9.3) wenigstens eine sich über zumindest einen Abschnitt der innerhalb des Mischergehäuses (8, 8.1, 8.2) befindlichen Länge des Dosierrohres (9, 9.1, 9.2, 9.3) erstreckende Einströmöffnung (17; 17.1, 17.2) mit mindestens einer auf dem Dosierrohr (9, 9.1, 9.2, 9.3) angeordneten, den Abgasstrom exzentrisch in die Einströmöffnung (17; 17.1, 17.2) lenkenden, schaufelartigen Haube (18; 18.1, 18.2, 18.3, 18.4, 18.5, 18.6) aufweist, wobei diese mindestens eine schaufelartige Haube (18; 18.1, 18.2, 18.3, 18.4, 18.5, 18.6) die wenigstens eine Einströmöffnung (17; 17.1, 17.2) seitlich und rückseitig einfasst und zumindest größtenteils in radialer Richtung überdeckt und wobei zwischen der zumindest einen Haube (18, 18.1, 18.2, 18.3, 18.4, 18.5, 18.6) und der inneren Mantelfläche des Mischergehäuses (8, 8.1, 8.2) ein Spalt (24) verbleibt, **dadurch gekennzeichnet, dass** das Dosierrohr (9, 9.1, 9.2, 9.3) das Mischergehäuse (8, 8.1, 8.2) durchgreift und die zumindest eine Einströmöffnung (17; 17.1, 17.2) des Dosierrohres (9, 9.1) sich über ein Mantelflächensegment von nicht weniger als 45° in Umfangsrichtung erstreckt und in einer Abwicklungsdarstellung derselben eine trapezförmige Umrissgeometrie aufweist, wobei die kürzere Seite dieser Grundrissgeometrie bezüglich der Einströmungsrichtung des Abgases der hintere, der Längserstreckung folgende Rand derselben ist, dass die Dosiereinheit (6) das Reaktionsmittel unter Druck stehend in das Dosierrohr (9, 9.1, 9.2, 9.3) einspritzt und dass der Sprühkegel (30) des in das Dosierrohr (9, 9.1, 9.2, 9.3) eingespritzten Reaktionsmittels in Längserstreckung des Dosierrohres (9, 9.1, 9.2, 9.3) in Richtung zu seinem zweiten Ende hin erst hinter der zumindest einen Einströmöffnung (17, 17.1, 17.2) auf die Innenwand des Dosierrohres (9, 9.1, 9.2, 9.3) auftrifft und dieser Innenwandabschnitt des Dosierrohres (9, 9.1, 9.2, 9.3) außenseitig von dem in die Einrichtung (5, 5.1, 5,2. 5,3, 5.4) einströmenden Abgas angeströmt ist.

2. Einrichtung nach Anspruch 1, **dadurch gekennzeichnet, dass** zumindest eine Haube (18, 18.1, 18.2, 18.3, 18.4, 18.5, 18.6) mit ihrer Mündung in Richtung zu der Eintrittsöffnung (15, 15.1) des Mischergehäuses (8, 8.1, 8.2) weist, in welche Haubenmündung durch die Eintrittsöffnung (15, 15.1) eintretendes Abgas direkt einströmt.

3. Einrichtung nach Anspruch 2, **dadurch gekennzeichnet, dass** die von dieser Haube (18, 18.1, 18.2, 18.3, 18.4, 18.5, 18.6) bedeckte Einströmöffnung (17, 17.1, 17.2) ihren vorderen, der Längserstreckung des Dosierrohres (9, 9.1, 9.2, 9.3) folgenden Rand im Bereich des quer zur Strömungsrichtung des einströmenden Abgases befindlichen Scheitels (26) des Dosierrohres (9, 9.1, 9.2, 9.3) in Strömungsrichtung des Abgases vor dem Scheitel (26) hat.

4. Einrichtung nach Anspruch 2 oder 3, **dadurch gekennzeichnet, dass** sich die dieser Haube (18, 18.1, 18.2, 18.3, 18.4, 18.5, 18.6) zugeordnete Einströmöffnung (17, 17.1, 17.2) über etwa 90°, insbesondere um wenige Winkelgrade mehr als 90° in Umfangsrichtung des Dosierrohres (9, 9.1, 9.2, 9.3) erstreckt.

5. Einrichtung nach einem der Ansprüche 1 bis 4, **dadurch gekennzeichnet, dass** das Mischergehäuse (8, 8.1, 8.2) einen halbkugelförmigen Innenraum aufweist und die Öffnung des Innenraums seine Eintrittsöffnung (15, 15.1) bildet.

6. Einrichtung nach einem der Ansprüche 1 bis 5, **dadurch gekennzeichnet, dass** das Mischergehäuse (8, 8.1, 8.2) zweiteilig ist und sich die quer zur Eintrittsöffnung verlaufende Mittellängsebene des Dosierrohres (9, 9.1, 9.2, 9.3) im Bereich der Teilungsebene der beiden Mischergehäuseteile (13, 13.1) befindet.

7. Einrichtung nach einem der Ansprüche 1 bis 6, **dadurch gekennzeichnet, dass** bei einer Ausgestaltung bei der das Dosierrohr (9.1) zwei oder mehr Einströmöffnungen (17.1, 17.2) aufweist, die zweite Einströmöffnung (17.2) diametral bezüglich der Längsachse des Dosierrohres (9.1, 9.2, 9.3) der ersten Einströmöffnung (17.1) gegenüberliegt und beide Haubenmündungen, in Umfangsrichtung des Dosierrohres (9.1, 9.2, 9.3) gesehen, mit ihren Hauben (18.1, 18.2, 18.3, 18.4, 18.5, 18.6) gleichsinnig ausgerichtet sind.

8. Einrichtung nach Anspruch 7, **dadurch gekennzeichnet, dass** die Erstreckung der zweiten Einströmöffnung (17.2) sich über ein kleineres Mantelflächensegment in Umfangsrichtung des Dosierrohres (9.1) erstreckt als die erste Einströmöffnung (17.1).

9. Einrichtung nach einem der Ansprüche 1 bis 8, **dadurch gekennzeichnet, dass** die zumindest eine Einströmöffnung und die diese jeweils bedeckende Haube (18.3, 18.4, 18.5, 18.6) in Bezug auf die Längserstreckung des Dosierrohres (9.2, 9.3) in seinem innerhalb des Mischergehäuses (8.1, 8.2) befindlichen Abschnitt außermittig angeordnet ist, wobei der Abstand der zumindest einen Haube (18.3, 18.4, 18.5, 18.6) von der den Dosierrohrumströmungsraum in Richtung zum zweiten Ende des Dosierrohres (9.2, 9.3) hin begrenzenden Wand (28) größer ist als der Abstand der Haube (18.3, 18.4, 18.5, 18.6) von der diesbezüglich gegenüberliegenden Wand (29).

10. Einrichtung nach Anspruch 9, **dadurch gekennzeichnet, dass** der Abstand der Haube (18.3, 18.4, 18.5, 18.6) der zumindest einen Einströmöffnung von der den Dosierrohrumströmungsraum in Richtung zum zweiten Ende des Dosierrohres (9.2, 9.3) hin begrenzten Wand (28) etwa drei- bis fünfmal größer ist als der Abstand der Haube (18.3, 18.4, 18.5, 18.6) von der gegenüberliegenden Wand (29).

11. Einrichtung nach einem der Ansprüche 1 bis 10, **dadurch gekennzeichnet, dass** das Dosierrohr (9, 9.1, 9.2, 9.3) im Bereich der Dosiereinheit (6) ein oder mehrere Spülöffnungen (27, 33, 34, 36) aufweist, um Abgas an der Reaktionsmittelausgabe der Dosiereinheit (6) vorbeiströmen zu lassen.

12. Einrichtung nach Anspruch 11, **dadurch gekennzeichnet, dass** das Dosierrohr (9, 9.1, 9.2, 9.3) eine Spülöffnungsanordnung (31, 31.1) mit mehreren Spülöffnungen aufweist, die nach Art eines Ringes benachbart zu der die zumindest eine Einströmöffnung bedeckenden Haube (18.5) angeordnet sind.

13. Einrichtung nach einem der Ansprüche 1 bis 12, **dadurch gekennzeichnet, dass** das Reaktionsmittel als in flüssiger Form vorliegender Precursor, insbesondere wässriger Harnstofflösung in das Dosierrohr (9, 9.1, 9.2, 9.3) eingespritzt wird.

14. Einrichtung nach einem der Ansprüche 1 bis 13, **dadurch gekennzeichnet, dass** zumindest zwei oder eine Vielzahl von zwei Einströmöffnungen mit jeweils einer schaufelartigen Haube vorgesehen sind, welche Hauben bezüglich des von diesen erzeugten Dralls in Richtung zum ersten und/oder zweiten Ende des Dosierrohres hin angestellt sind.

15. Einrichtung nach Anspruch 14, **dadurch gekennzeichnet, dass** die Hauben wechselweise zum ersten und zum zweiten Ende des Dosierrohres hin angestellt sind.

16. Einrichtung nach einem der Ansprüche 1 bis 15, **dadurch gekennzeichnet, dass** die Eintrittsöffnung (15, 15.1) des Mischergehäuses (8, 8.1, 8.2) unmittelbar an den Ausgang eines Abgasreinigungsaggregates, insbesondere eines Partikelfilters (2) angeschlossen ist.

17. Abgasreinigungsanlage zum Reduzieren des NOx-Gehaltes der Abgase einer Brennkraftmaschine an einem SCR-Katalysator (4), umfassend einen SCR-Katalysator (4) und einer in Strömungsrichtung des Abgasstromes stromauf zu diesem angeordneten Einrichtung (5, 5.1. 5.2, 5.3, 5.4) zum Zuführen eines für die SCR-Katalyse erforderlichen Reduktionsmittels, insbesondere wässrige Harnstofflösung, in den Abgasstrang, **dadurch gekennzeichnet, dass** diese Einrichtung eine Einrichtung (5, 5.1, 5.2, 5.3, 5.4) nach einem der Ansprüche 1 bis 16 ist.

## Claims

1. Device for supplying a chemical reactant into the exhaust system of an internal combustion engine, comprising
- a mixer housing (8, 8.1, 8.2) with an inlet opening (15, 15.1), through which the exhaust gas flow enters into the mixer housing (8, 8.1, 8.2),
- a metering pipe (9, 9.1, 9.2, 9.3) with a first end and a second end, towards which the exhaust gas flow flowing into the mixer housing (8, 8.1, 8.2) flows in a transverse direction,
- a metering unit (6), which is arranged at the first end of the metering pipe (9, 9.1, 9.2, 9.3) and can be connected to a reactant supply, for discharging reactant into the metering pipe (9, 9.1, 9.2, 9.3), and
- means for generating a swirl flow of the exhaust gas flow, wherein these means are designed to generate this within the metering pipe (9, 9.1, 9.2, 9.3), and for this purpose the metering pipe (9, 9.1, 9.2, 9.3) has at least one in-flow opening (17; 17.1, 17.2), extending over at least one section of the length of the metering pipe (9, 9.1, 9.2, 9.3) located within the mixer housing (8, 8.1, 8.2), with at least one shovel-shaped hood (18; 18.1, 18.2, 18.3, 18.4, 18.5, 18.6) arranged on the metering pipe (9, 9.1, 9.2, 9.3), directing the exhaust gas flow eccentrically into the in-flow opening (17; 17.1, 17.2), wherein this at least one shovel-shaped hood (18; 18.1, 18.2, 18.3, 18.4, 18.5, 18.6) encloses the at least one in-flow opening (17; 17.1, 17.2) at the side and at the back and at least mostly covers it in the radial direction, and wherein a gap (24) remains between the at least one hood (18; 18.1, 18.2, 18.3, 18.4, 18.5, 18.6) and the inner casing surface of the mixer housing (8, 8.1, 8.2), **characterised in that** the metering pipe (9, 9.1, 9.2, 9.3) engages through the mixer housing (8, 8.1, 8.2), and the at least one in-flow opening (17; 17.1, 17.2) of the metering pipe (9, 9.1) extends over a casing surface segment of no less than 45° in the circumferential direction, and in an angular configuration of this exhibits a trapezoidal outline geometry, wherein the shorter side of this outline geometry, in relation to the inflow direction of the exhaust gas, is the same as the rear edge following the longitudinal extension, that the metering unit (6) injects the reactant under pressure into the metering pipe (9, 9.1, 9.2, 9.3), and that the spray cone (30) of the reactant being injected into the metering pipe (9, 9.1, 9.2, 9.3), in the longitudinal extension of the metering pipe (9, 9.1, 9.2, 9.3) in the direction towards its second end, only emerges behind the at least one in-flow opening (17, 17.1, 17.2) onto the inner wall of the metering pipe (9, 9.1, 9.2, 9.3), and the exhaust gas flowing into the device (5, 5.1, 5.2, 5.3, 5.4) flows on the outside of this inner wall section of the metering pipe (9, 9.1, 9.2, 9.3).

2. Device according to claim 1, **characterised in that** at least one hood (18, 18.1, 18.2, 18.3, 18.4, 18.5, 18.6) points with its mouth in the direction towards the inlet opening (15, 15.1) of the mixer housing (8, 8.1, 8.2), into which hood mouth the gas entering through the inlet opening (15, 15.1) flows directly.

3. Device according to claim 2, **characterised in that** the in-flow opening (17, 17.1, 17.2), covered by this hood (18, 18.1, 18.2, 18.3, 18.4, 18.5, 18.6), has its front edge, following the longitudinal extension of the metering pipe (9, 9.1, 9.2, 9.3), in the region of the crest (26) of the metering pipe (9, 9.1, 9.2, 9.3) located transverse to the flow direction of the inflowing exhaust gas, in the flow direction of the exhaust gas before the crest (26).

4. Device according to claim 2 or 3, **characterised in that** the in-flow opening (17, 17.1, 17.2) assigned to this hood (18, 18.1, 18.2, 18.3, 18.4, 18.5, 18.6) extends over about 90°, in particular by a few degrees more than 90° in the circumferential direction of the metering pipe (9, 9.1, 9.2, 9.3).

5. Device according to any one of claims 1 to 4, **characterised in that** the mixer housing (8, 8.1, 8.2) exhibits a hemispherically shaped interior, and the opening of the interior forms its inlet opening (15, 15.1).

6. Device according to any one of claims 1 to 5, **characterised in that** the mixer housing (8, 8.1, 8.2) is of two parts, and the middle longitudinal plane of the metering pipe (9, 9.1, 9.2, 9.3) running transversely to the inlet opening is located in the region of the partition plane of the two mixer housing parts (13, 13.1).

7. Device according to any one of claims 1 to 6, **characterised in that** in one embodiment, in which the metering pipe (9.1) comprises two or more in-flow openings (17.1, 17.2), the second in-flow opening (17.2) is aligned diametrically opposite to the first in-flow opening (17.1), in relation to the longitudinal axis of the metering pipe (9.1, 9.2, 9.3), and both hood mouths, seen in the circumferential direction of the metering pipe (9.1, 9.2, 9.3), are aligned with their hoods (18.1, 18.2, 18.3, 18.4, 18.5, 18.6) in the same direction.

8. Device according to claim 7, **characterised in that** the extension of the second n-flow opening (17.2) extends over a smaller casing surface segment in the circumferential direction of the metering pipe (9.1) than the first in-flow opening (17.1).

9. Device according to any one of claims 1 to 8, **characterised in that** the at least one in-flow opening and the hood (18.3, 18.4, 18.5, 18.6) covering this is arranged in each case, in relation to the longitudinal extension of the metering pipe (9.2, 9.3), off-centre in its section located within the mixer housing (8.1, 8.2), wherein the distance interval between the at least one hood (18.3, 18.4, 18.5, 18.6) and the wall (28) delimiting the metering pipe swirl chamber in the direction towards the second end of the metering pipe (9.2, 9.3) is greater than the distance interval between the hood (18.3, 18.4, 18.5, 18.6) and the wall (29) opposite this.

10. Device according to claim 9, **characterised in that** the distance interval between the hood (18.3, 18.4, 18.5, 18.6) of the at least one in-flow opening, and the wall (28) delimiting the metering pipe swirl chamber in the direction towards the second end of the metering pipe (9.2, 9.3), is approximately three to five times greater than the distance interval between the hood (18.3, 18.4, 18.5, 18.6) and the opposite wall (29).

11. Device according to any one of claims 1 to 10, **characterised in that** the metering pipe (9, 9.1, 9.2, 9.3) comprises in the region of the metering unit (6) one or more flushing openings (27, 33, 34, 36) in order to allow exhaust gas to flow past at the reactant outlet of the metering unit (6).

12. Device according to claim 11, **characterised in that** the metering pipe (9, 9.1, 9.2, 9.3) comprises a flushing opening arrangement (31, 31.1) with a plurality of flushing openings, which are arranged in the form of a ring adjacent to the hood (18.5) covering the at least one in-flow opening.

13. Device according to any one of claims 1 to 12, **characterised in that** the reactant is injected as a precursor in fluid form, in particular as an aqueous urea solution into the metering pipe (9, 9.1, 9.2, 9.3).

14. Device according to any one of claims 1 to 13, **characterised in that** at least two or a multiple of two injection openings are provided in each case with a shovel-like hood, which hoods are arranged, in relation to the swirl effect which they generate, in the direction towards the first and/or second end of the metering pipe.

15. Device according to claim 14, **characterised in that** the hoods are arranged alternating towards the first and second end of the metering pipe.

16. Device according to any one of claims 1 to 15, **characterised in that** the inlet opening (15, 15.1) of the mixer housing (8, 8.1, 8.2) is connected directly to the outlet of an exhaust gas purification apparatus, in particular a particle filter (2).

17. Exhaust gas purification system for reducing the NOx content of the exhaust gas of an internal combustion engine at an SCR catalytic converter (4), comprising an SCR catalytic converter (4) and a device (5, 5.1, 5.2, 5.3, 5.4) arranged upstream to this in the flow direction of the exhaust gas flow, for introducing a reduction means [*sic* - *reactant?*] required for the SCR catalysis, in particular an aqueous urea solution, into the exhaust gas system, **characterised in that** this device is a device (5, 5.1, 5.2, 5.3, 5.4) according to any one of claims 1 to 16.

## Revendications

1. Dispositif pour acheminer un réactif chimique dans la ligne d'échappement d'un moteur à combustion interne, comprenant
- un carter mélangeur (8, 8.1, 8.2) muni d'un orifice d'entrée (15, 15.1) à travers lequel le flux de gaz d'échappement arrive dans le carter mélangeur (8, 8.1, 8.2),
- un tube doseur (9, 9.1, 9.2, 9.3) muni d'une première extrémité et d'une seconde extrémité, lequel reçoit perpendiculairement le flux de gaz d'échappement qui arrive dans le carter mélangeur (8, 8.1, 8.2),
- une unité de dosage (6) disposée sur la première extrémité du tube doseur (9, 9.1, 9.2, 9.3), raccordable à un stock de réactif, destinée à délivrer du réactif dans le tube doseur (9, 9.1, 9.2 et 9.3) et
- des moyens pour produire une vrille dans le flux des gaz d'échappement, ces moyens étant conformés pour la produire à l'intérieur du tube doseur (9, 9.1, 9.2, 9.3) et qu'à cet effet, le tube doseur (9, 9.1, 9.2, 9.3) présente au moins une ouverture d'admission (17 ; 17.1, 17.2), s'étendant sur au moins un tronçon de la longueur du tube doseur (9, 9.1, 9.2, 9.3), située à l'intérieur du carter mélangeur (8, 8.1, 8.2), avec au moins un capot (18, 18.1, 18.2, 18.3, 18.4, 18.5, 18.6) de type pale, disposé sur le tube doseur (9, 9.1, 9.2, 9.3), dirigeant excentriquement le flux de gaz d'échappement vers l'ouverture d'admission (17 ; 17.1, 17.2), lequel au moins un capot (18, 18.1, 18.2, 18.3, 18.4, 18.5, 18.6) de type pale, englobe latéralement et par le dos l'au moins une ouverture d'admission (17 ; 17.1, 17.2) et la recouvre dans le sens radial, du moins sur la plus grande partie, et tout en laissant une fente (24) entre l'au moins au moins un capot (18, 18.1, 18.2, 18.3, 18.4, 18.5, 18.6) et la surface d'enveloppe interne du carter mélangeur (8, 8.1, 8.2), **caractérisé en ce que** le tube doseur (9, 9.1, 9.2, 9.3) traverse le carter mélangeur (8, 8.1, 8.2) et que l'au moins une ouverture d'admission (17 ; 17.1, 17.2) du tube doseur (9, 9.1) s'étend sur un segment de surface d'enveloppe qui n'est pas inférieur à 45° dans le sens circonférentiel et présente, dans une représentation de réalisation de celui-ci, un contour géométrique de forme trapézoïdale, le côté le plus court de ce tracé géométrique étant, considéré dans le sens d'admission de l'échappement, le bord arrière de celui-ci qui suit l'étendue longitudinale, **en ce que** l'unité de dosage (6) injecte le réactif, disponible sous pression, dans le tube doseur (9, 9.1, 9.2, 9.3) et **en ce que** le cône de nébulisation (30) du réactif injecté dans l'étendue longitudinale du tube doseur (9, 9.1, 9.2, 9.3), en direction de sa seconde extrémité, ne se forme que derrière l'au moins une ouverture d'admission (17, 17.1, 17.2), sur la paroi intérieure du tube doseur (9, 9.1, 9.2, 9.3) et que, sur ce tronçon de paroi intérieure du tube doseur (9, 9.1, 9.2, 9.3), circule, sur la face extérieure, le gaz d'échappement qui arrive dans le dispositif (5, 5.1, 5.2, 5.3, 5.4).

2. Dispositif selon la revendication 1, **caractérisé en ce qu'**au moins un capot (18, 18.1, 18.2, 18.3, 18.4, 18.5, 18.6) est orienté avec son embouchure en direction de l'orifice d'entrée (15, 15,1) du carter mélangeur (8, 8.1, 8.2), dans laquelle embouchure de capot arrivent directement les gaz d'échappement qui passent par l'orifice d'entrée (15, 15.1).

3. Dispositif selon la revendication 2, **caractérisé en ce que** l'ouverture d'admission (17, 17.1, 17.2) recouverte par ce capot (18, 18.1, 18.2, 18.3, 18.4, 18.5, 18.6) a son bord avant, lequel suit l'étendue longitudinale du tube doseur (9, 9.1, 9.2, 9.3), au niveau de la crête (26) du tube doseur (9, 9.1, 9.2, 9.3), laquelle se situe perpendiculairement au sens de circulation des gaz d'échappement qui affluent, avant la crête (26), dans le sens de circulation des gaz d'échappement.

4. Dispositif selon la revendication 2 ou 3, **caractérisé en ce que** cette ouverture d'admission (17, 17.1, 17.2) affectée à ce capot (18, 18.1, 18.2, 18.3, 18.4, 18.5, 18.6) s'étend sur environ 90°, notamment sur légèrement plus de 90°, de l'ordre de quelques degrés angulaires, dans le sens circonférentiel du tube doseur (9, 9.1, 9.2, 9.3).

5. Dispositif selon l'une des revendications 1 à 4, **caractérisé en ce que** le carter mélangeur (8, 8.1, 8.2) présente un espace intérieur de forme demi-sphérique, et que l'ouverture de l'espace intérieur constitue son orifice d'entrée (15, 15.1).

6. Dispositif selon l'une des revendications 1 à 5, **caractérisé en ce que** le carter mélangeur (8, 8.1, 8.2) est en deux parties et que le plan longitudinal médian du tube doseur (9, 9.1, 9.2, 9.3) s'étendant perpendiculairement à l'orifice d'entrée se trouve au niveau du plan de séparation des deux parties (13, 13.1) du carter mélangeur.

7. Dispositif selon l'une des revendications 1 à 6, **caractérisé en ce que** lors d'une réalisation où le tube doseur (9.1) présente deux ouvertures d'admission (17.1, 17.2) ou plus, la seconde ouverture d'admission (17.2) est, si l'on se réfère à l'axe longitudinal du tube doseur (9.1, 9.2, 9.3), diamétralement opposée à la première ouverture d'admission (17.1) et les deux embouchures de capot sont, considéré dans le sens circonférentiel du tube doseur (9.1, 9.2, 9.3), orientées avec leurs capots (18.1, 18.2, 18.3, 18.4, 18.5, 18.6) dans le même sens.

8. Dispositif selon la revendication 7, **caractérisé en ce que** l'étendue de la seconde ouverture d'admission (17.2) s'étend dans le sens circonférentiel du tube doseur (9.1), sur un segment de surface d'enveloppe plus petit que la première ouverture d'admission (17.1).

9. Dispositif selon l'une des revendications 1 à 8, **caractérisé en ce que** au moins une ouverture d'admission avec le capot (18.3, 18.4, 18.5, 18.6) qui la recouvre, est disposée de manière excentrée par rapport à l'étendue longitudinale du tube doseur (9.2, 9.3), dans son tronçon situé à l'intérieur du carter mélangeur (8.1, 8.2), l'intervalle entre l'au moins un capot (18.3, 18.4, 18.5, 18.6) et la paroi (28) qui délimite l'espace de circulation autour du tube doseur en direction de la seconde extrémité du tube doseur (9.2, 9.3) étant plus grand que l'intervalle du capot (18.3, 18.4, 18.5, 18.6) par rapport à la paroi (29) qui lui est opposée.

10. Dispositif selon la revendication 9, **caractérisé en ce que** l'intervalle entre le capot (18.3, 18.4, 18.5, 18.6) d'au moins une ouverture d'admission et la paroi (28) délimitant l'espace de circulation autour du tube doseur en direction de la seconde extrémité du tube doseur (9.2, 9.3) est environ trois à cinq fois plus grand que l'intervalle entre le capot (18.3, 18.4, 18.5, 18.6) et la paroi opposée (29).

11. Dispositif selon l'une des revendications 1 à 10, **caractérisé en ce que** le tube doseur (9, 9.1, 9.2, 9.3) présente au niveau de l'unité de dosage (6), une ou plusieurs ouvertures de vidange (27, 33, 34, 36), afin de laisser circuler le gaz d'échappement près de la diffusion de réactif de l'unité de dosage (6).

12. Dispositif selon la revendication 11, **caractérisé en ce que** le tube doseur (9, 9.1, 9.2, 9.3) présente un agencement d'ouverture de vidange (31, 31.1) comportant plusieurs ouvertures de vidange disposées en cercle au voisinage du capot (18.5) recouvrant l'au moins une ouverture d'admission.

13. Dispositif selon l'une des revendications 1 à 12, **caractérisé en ce que** le réactif, disponible en tant que précurseur sous forme liquide, notamment en tant que solution aqueuse d'urée, est injecté dans le tube doseur (9, 9.1, 9.2, 9.3).

14. Dispositif selon l'une des revendications 1 à 13, **caractérisé en ce qu'**au moins deux, ou un multiple de deux, ouvertures d'admission avec respectivement un capot de type pale sont prévues, lesquels capots sont disposés, par rapport à la vrille générée par ceux-ci, en direction de la première et/ou de la seconde extrémité du tube doseur.

15. Dispositif selon la revendication 14, **caractérisé en ce que** les capots sont disposés orientés alternativement vers la première et vers la seconde extrémité du tube doseur.

16. Dispositif selon l'une des revendications 1 à 15, **caractérisé en ce que** l'orifice d'entrée (15, 15.1) du carter mélangeur (8, 8.1, 8.2) est directement raccordé à la sortie d'un groupe d'épuration des gaz d'échappement, notamment d'un filtre à particules (2).

17. Installation d'épuration des gaz d'échappement destinée à réduire le taux de NOₓ des gaz d'échappement d'un moteur à combustion interne intégrée à un catalyseur à Réduction Catalytique Sélective (4), comportant un catalyseur RCS (4) et un dispositif (5, 5.1, 5.2, 5.3, 5.4) placé en amont de celui-ci dans le sens de circulation du flux de gaz d'échappement, destiné à acheminer dans la ligne d'échappement un réducteur indispensable pour une Réduction Catalytique Sélective, notamment une solution aqueuse d'urée, **caractérisé en ce que** ce dispositif est un dispositif (5, 5.1, 5.2, 5.3, 5.4) selon l'une des revendications 1 à 16.
